# EUROPEAN PATENT APPLICATION

(11) **EP 4 786 433 A1**
(43) Date of publication of application: **05.08.2026**
(21) Application number: 24872433.8
(22) Date of filing: 26.09.2024
(51) Int. Cl.: C03C 27/12, B32B 7/023, B32B 17/10, B60J 1/00, C08K 3/10, C08L 101/00

(54) **INTERMEDIATE FILM FOR LAMINATED GLASS, AND LAMINATED GLASS**

(30) Priority: 29.09.2023 JP 2023170798
(71) Applicant: Sekisui Chemical Co., Ltd., Osaka-shi, Osaka 530-8565 (JP)
(72) Inventor: SUZUKI, Yuuki, Koka-shi, Shiga 528-8585 (JP); NOMURA, Minako, Koka-shi, Shiga 528-8585 (JP); OOTA, Yuusuke, Koka-shi, Shiga 528-8585 (JP)
(74) Representative: Osha BWB
(86) International application number: PCT/JP2024/034506
(87) International publication number: WO 2025/070649

(57) **Abstract**

This intermediate film for laminated glass has a first resin layer, wherein the first resin layer includes at least two kinds of filler (A), the haze is 2.0%-13.0%, and the reflectance is flat in a spectral reflectance curve in a wavelength range of 400-700 nm.

## Description

### Technical Field

The present invention relates to an interlayer film for laminated glass, and to laminated glass comprising the interlayer film for laminated glass.

### Background Art

Laminated glass is safe because few glass fragments are scattered even if the laminated glass breaks after being subjected to an external impact, and it is therefore widely used in window glass for various types of passenger vehicles such as automobiles, and in window glass for buildings, etc. An interlayer film for laminated glass comprising a resin component such as polyvinyl acetal resin, which is interposed between a pair of glass sheets to be integrated therewith, is widely known as laminated glass.

There has been greater demand in recent years for interlayer films for laminated glass with better design properties, and colorants are sometimes incorporated into interlayer films for laminated glass to produce coloring. Furthermore, it is also known to blend metallic particles into an interlayer film for laminated glass for coloring purposes, and Patent Document 1, for example, indicates that a metallic pigment is blended with an interlayer film for laminated glass comprising polyvinyl butyral and a plasticizer, for the purpose of coloring. Here, Patent Document 1 also indicates that a further coloring material such as a pigment or dye is further contained in a resin composition in which the metallic pigment has been blended. A plate-like mica pigment covered with a metal oxide is furthermore disclosed as an example of a metallic pigment.

### Prior Art Documents

### Patent Documents

Patent Document 1: WO 2016/028963 A1

### Summary of the Invention

### Problems to be Solved by the Invention

Recent years have seen greater diversity in designs for window glass for automobiles and buildings, and it is sometimes desirable for various depictions to be provided in automobiles also, for example. However, a conventional interlayer film for laminated glass having a pigment or dye blended therein simply colors the window glass and cannot adequately enhance the design properties. Furthermore, a glossy appearance can be produced by blending a metallic pigment, as described in Patent Document 1, but an interlayer film for laminated glass having a metallic pigment blended therein generally tends to have reduced transparency.

The problem addressed by the present invention therefore lies in providing an interlayer film for laminated glass having excellent transparency while also enhancing design properties by producing a metallic appearance.

### Means for Solving the Problems

As a result of thorough research, the present inventors found that the problems above could be solved by using two or more types of fillers, setting the haze in a selected range, and making the reflectance flat in a spectral reflectance curve at wavelengths of 400-700 nm, and thus completed the present invention as below. That is to say, the present invention provides the following [1]-[15].
[1] An interlayer film for laminated glass comprising a first resin layer, wherein the first resin layer includes at least two or more types of fillers (A), the haze is 2.0% or greater and 13.0% or less, and the reflectance is flat in a spectral reflectance curve at wavelengths of 400-700 nm.
[2] The interlayer film for laminated glass as disclosed in [1] above, wherein a ratio of the maximum value to the minimum value of the reflectance in the spectral reflectance curve at wavelengths of 400-700 nm is 1.0 or greater and 1.4 or less.
[3] The interlayer film for laminated glass as disclosed in [1] or [2] above, wherein the fillers (A) have a* of reflected light of -9.0 or greater and 7.0 or less, and b* included in a range of - 8.5 or greater and 8.5 or less.
[4] The interlayer film for laminated glass as disclosed in any of [1]-[3] above, wherein the fillers (A) comprise two or more types of complementary colors.
[5] The interlayer film for laminated glass as disclosed in any of [1]-[4] above, wherein, for any two types of fillers in the fillers (A), the absolute value of a value obtained by adding a* of reflected light (|Ra* (F1) + Ra* (F2)|) is 0 or greater and 3.0 or less, and the absolute value of a value obtained by adding b* of reflected light (|Rb* (F1) + Rb* (F2)|) is 0 or greater and 7.0 or less.(Where a* and b* of a first type of filler are Ra* (F1) and Rb* (F1), and a* and b* of a second type of filler are Ra* (F2) and Rb* (F2).)
[6] The interlayer film for laminated glass as disclosed in any of [1]-[5] above, wherein each of the at least two or more types of fillers (A) comprises a metal oxide.
[7] The interlayer film for laminated glass as disclosed in any of [1]-[6] above, wherein chroma Rc* of reflected light in the visible light region of the first resin layer is 0 or greater and 5.5 or less.
[8] The interlayer film for laminated glass as disclosed in any of [1]-[7] above, wherein chroma Tc* of transmitted light in the visible light region of the first resin layer is 0 or greater and 5.5 or less.
[9] The interlayer film for laminated glass as disclosed in any of [1]-[8] above, wherein the first resin layer satisfies at least any of the following conditions (1)-(3). (1) The chroma Rc* of reflected light in the visible light region is 0 or greater and 4.0 or less. (2) The chroma Tc* of transmitted light in the visible light region is 0 or greater and 4.0 or less.(3) The haze is 3.0% or greater and 10.0% or less.
[10] The interlayer film for laminated glass as disclosed in any of [1]-[9] above, wherein the first resin layer further comprises a colorant.
[11] The interlayer film for laminated glass as disclosed in any of [1]-[10] above, further comprising a second resin layer.
[12] The interlayer film for laminated glass as disclosed in [11] above, wherein the second resin layer comprises a colorant.
[13] The interlayer film for laminated glass as disclosed in [12] above, wherein a ratio of the maximum value to the minimum value of the reflectance is 1.0 or greater and 1.6 or less in a spectral reflectance curve at wavelengths of 400-700 nm, as measured from the first resin layer side.
[14] The interlayer film for laminated glass as disclosed in any of [1]-[13] above, which satisfies at least one of the following conditions (4) and (5).(4) The chroma Rc* of reflected light in the interlayer film for laminated glass is 0 or greater and 7.0 or less. (5) The chroma Tc* of transmitted light in the interlayer film for laminated glass is 0 or greater and 7.0 or less.
[15] A laminated glass comprising:
   a first laminated glass member; a second laminated glass member; and the interlayer film for laminated glass as disclosed in any one of [1]-[14] above, wherein the interlayer film is disposed between the first laminated glass member and the second laminated glass member.

### Advantageous Effects of the Invention

The present invention makes it possible to provide an interlayer film for laminated glass having excellent transparency while also enhancing design properties by producing a metallic appearance.

### Brief Description of the Drawings

[Fig. 1] is a schematic diagram showing flat reflectance in a spectral reflectance curve.
[Fig. 2] is a schematic view in cross section showing a flat plate-shaped filler (A) having a layered structure.
[Fig. 3] is a schematic view in cross section showing an example of an interlayer film for laminated glass.
[Fig. 4] shows a spectral reflectance curve of Example 1.
[Fig. 5] shows a spectral reflectance curve of Comparative Example 1.

### Embodiment of the Invention

The present invention will be described in further detail below.
An interlayer film for laminated glass according to the present invention (which is also referred to below simply as an "interlayer film") comprises a first resin layer, and the first resin layer includes at least two or more types of fillers (A). Furthermore, the interlayer film according to the present invention has a haze of 2.0% or greater and 13% or less, and has flat reflectance in a spectral reflectance curve at wavelengths of 400-700 nm.
By virtue of having the configuration above, the interlayer film can be endowed with better transparency, while the design properties are enhanced by producing a metallic appearance. The interlayer film according to the present invention will be described in detail below.

### (Haze)

The haze (Haze) of the interlayer film according to the present invention is 2.0% or greater and 13.0% or less. If the haze (Haze) is greater than 13.0%, this causes cloudiness, making it difficult to increase transparency, and it is not possible to inhibit light scattering. Furthermore, if the haze (Haze) is less than 2.0%, it becomes difficult to produce a substantial metallic appearance with a high-class feel by means of the filler (A).

From this perspective, the haze (Haze) of the interlayer film is preferably 12.0% or less, more preferably 10.0% or less, and even more preferably 9.5% or less, and is preferably 3.0% or greater, more preferably 4.0% or greater, and even more preferably 4.5% or greater.

Note that the haze (Haze) of the interlayer film may be adjusted by the type and content, etc. of filler.

Moreover, the haze (Haze) of the interlayer film was obtained by measurement from either one face of laminated glass produced by bonding two reference clear glass sheets together with the interlayer film therebetween. It is therefore not necessarily essential for the values (Haze 1, Haze 2) measured from both faces to be within the range above. However, if a second resin layer (colored layer) is provided in addition to the first resin layer, as will be described later, the value measured from the second resin layer side (Haze 1) is preferably used as the haze (Haze) of the interlayer film. It should be noted that laminated glass produced under the conditions disclosed in the examples may be preferably used as the laminated glass produced for the haze (Haze) measurement.

### (Spectral Reflectance)

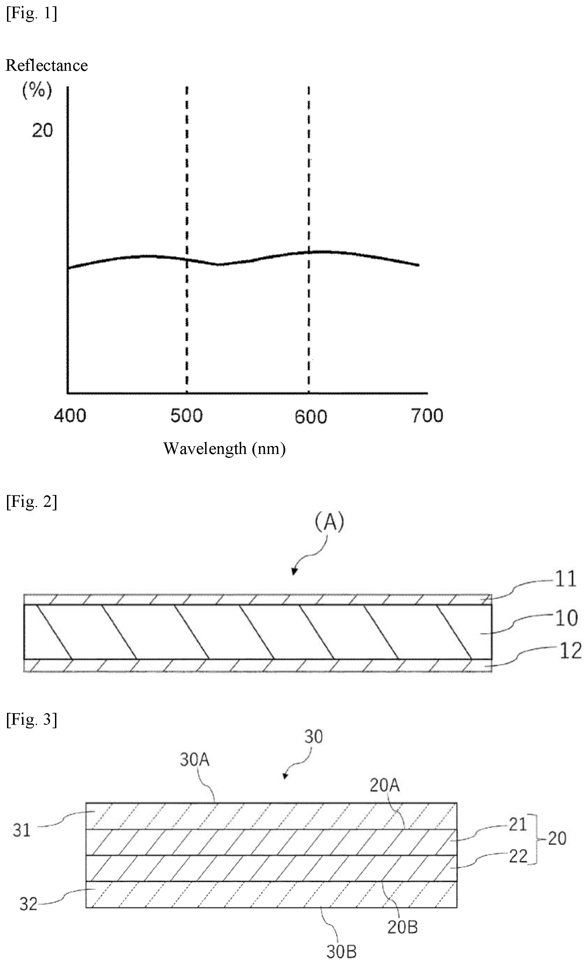

The interlayer film according to the present invention has a flat reflectance in a spectral reflectance curve at wavelengths of 400-700 nm. In the present invention, the reflectance being flat makes it possible to enhance the design properties by producing a metallic appearance with a high-class feel and an intense gray impression. Here, a flat reflectance means that, when a spectral reflectance curve at wavelengths of 400-700 nm is created with wavelength on the horizontal axis and reflectance on the vertical axis, as shown in fig. 1, the spectral reflectance curve is largely flat and there is essentially no wavelength dependency of the reflectance at wavelengths of 400-700 nm.

In the spectral reflectance curve at wavelengths of 400-700 nm, Rmax/Rmin, which is a ratio of the maximum value to the minimum value of reflectance, may be 1.6 or less. When Rmax/Rmin is 1.6 or less, the spectral reflectance curve can be said to be generally flat, and it is easy to produce a metallic appearance with a high-class feel. Rmax/Rmin is more preferably 1.5 or less, even more preferably 1.4 or less, and still more preferably 1.35 or less. It should be noted that a lower Rmax/Rmin is better, and 1.0 or greater is sufficient.
It should be noted that when a second resin layer (colored layer) is provided, as will be described later, Rmax/Rmin is relatively large, and it is preferably 1.6 or less, more preferably 1.5 or less, and even more preferably 1.4 or less.
Meanwhile, when the second resin layer (colored layer) is not provided, Rmax/Rmin is relatively small, and it is preferably 1.4 or less, more preferably 1.35 or less, and even more preferably 1.3 or less.
Note that, in the spectral reflectance curve at wavelengths of 400-700 nm, the reflectance at the wavelength where the reflectance is at a maximum is Rmax (maximum value) and the reflectance at the wavelength where the reflectance is at a minimum is Rmin (minimum value).

Rmin in the spectral reflectance curve at wavelengths of 400-700 nm is preferably 4% or greater, more preferably 6% or greater, even more preferably 7% or greater, and still more preferably 9% or greater. Rmin being 4% or greater enables a metallic appearance to be sufficiently demonstrated. Furthermore, Rmin is preferably 50% or less, more preferably 40% or less, even more preferably 25% or less, and still more preferably 18% or less. Rmin being 50% or less makes it possible to prevent a needless reduction in transparency due to needless reflection.
It should be noted that the spectral reflectance can be adjusted by the type and content of filler. Furthermore, since there are two or more types of fillers, it is possible to reduce Rmax/Rmin and to make the reflectance flat by adjusting the type and contents of the fillers.

Moreover, the spectral reflectance curve was obtained by measuring the spectral reflectance from either one face of laminated glass produced by bonding two reference clear glass sheets together with the interlayer film therebetween. In this case, laminated glass produced under the conditions disclosed in the examples may be preferably used.
However, when the second resin layer (colored layer) is provided in addition to the first resin layer, as will be described later, the spectral reflectance curve is preferably produced using the spectral reflectance measured from the first resin layer side. That is to say, the spectral reflectance is preferably obtained on the opposite face to that used for the haze measurement.

### (Filler (A))

In the present invention, the first resin layer comprises two or more types of fillers (A). By virtue of the first resin layer comprising two or more types of fillers (A), it is possible to achieve flat reflectance in the spectral reflectance curve at wavelengths of 400-700 nm while also keeping the haze low, and a metallic appearance with a high-class feel can be produced.

Each of the two or more types of fillers (A) may be a filler comprising any of a metal, a metal oxide, and a non-metal material. In the first resin layer, the fillers (A) may be dispersed in the resin constituting the first resin layer. Each of the two or more types of fillers (A) preferably comprises at least either of a metal oxide and a non-metal material, and more preferably comprises a metal oxide. Furthermore, the two or more types of fillers (A) may have visible light reflection performance. It is easy to produce a metallic appearance when the fillers (A) are formed by a specific material and have visible light reflection performance.

Metals in the fillers (A) that may be cited include: aluminum, silver, copper, platinum, gold, titanium, nickel, tin, tin-cobalt alloy, indium, and chromium, etc. Metal oxides that may be cited include: titanium oxide, silicon oxide, indium oxide, niobium oxide, zinc oxide, antimony oxide, and tungsten oxide, etc. Furthermore, nonmetals that may be cited include inorganic compounds other than metals and metal oxides, and glass and mica, etc. may be specifically cited.

Each filler (A) comprising a metal oxide is preferably a filler containing two or more types of compounds in each particle, and is preferably a filler comprising two or more types of metal oxides in each particle, or a filler comprising a metal oxide and a non-metal material such as mica or glass in each particle. Among these, each filler (A) is more preferably a filler comprising two or more types of metal oxides in each particle.

A filler containing two or more types of compounds in each particle preferably has a multilayer structure, and fillers which may be specifically cited include a filler having a multilayer structure comprising two or more types of metal oxides, a filler having a multilayer structure comprising a metal oxide and mica, and a filler having a multilayer structure comprising a metal oxide and glass. The filler (A) in the first resin layer having this multilayer structure makes it easier to adjust the a* and b* values of reflected light in the filler (A) (to be described later), and makes it easier to achieve a flat reflectance, etc. in the spectral reflectance curve at wavelengths of 400-700 nm.
Among those described above, it is more preferred for each filler (A) to have a multilayer structure comprising two or more types of metal oxides. The filler (A) readily imparts a metallic appearance to reflected light by virtue of having a multilayer structure comprising two or more types of metal oxides. Furthermore, it is easy to maintain light transmittance of the first resin layer and easy to improve transparency.

The two or more types of metal oxides in the multilayer structure comprising metal oxides may preferably have different refractive indices. Layers having different refractive indices are formed by metal oxides having different refractive indices, and it is thereby easy to maintain a suitable metallic appearance from reflection between layers, and it is also possible to easily adjust the a* and b* values of reflected light in the filler (A) (to be described later). Furthermore, the layers formed by the metal oxides having different refractive indices may be preferably adjacent in the filler having a multilayer structure comprising metal oxides.
A difference in refractive indices between the metal oxides having different refractive indices is preferably 0.1 or greater and 1.2 or less from the perspective of further improving transparency and metallic appearance. This refractive index difference is more preferably 0.3 or greater and 1.1 or less, and even more preferably 0.6 or greater and 1.05 or less.

A thickness ratio between layers formed by the different metal oxides in the filler (A) having a multilayer structure comprising two or more types of metal oxides is preferably 1:2-1:15. The filler (A) having such a thickness ratio makes it easier to obtain a metallic appearance. This thickness ratio is more preferably 1:3-1:13, and even more preferably 1:4-1:11. Furthermore, by controlling the thickness ratio, it is also possible to vary the hue (a*, b*) of reflected light in the filler (A). It should be noted that the thickness ratio is the average of a value measured by scanning electron microscope (SEM), etc. observation of any 50 particles.

Each of the two or more types of metal oxides may be preferably selected from the group consisting of: titanium oxide, silicon oxide, indium oxide, niobium oxide, zinc oxide, antimony oxide, and tungsten oxide, and among these, titanium oxide and silicon oxide are preferred. The titanium oxide is titanium dioxide (TiO₂), which may be rutile form, anatase form, or brookite form. The silicon oxide is silicon dioxide (SiO₂).
The filler (A) more preferably contains both titanium oxide and silicon oxide, and more preferably has a multilayer structure comprising a titanium oxide layer and a silicon oxide layer. The filler (A) is preferably composed of metal oxide particles having a multilayer structure, formed from the two or more types of metal oxides as described above, and is preferably composed of particles in which metal oxide particles (a middle layer to be described later) comprising at least one type of metal oxide are covered by at least one different type of metal oxide.

The filler (A) having a multilayer structure comprising a metal oxide and glass may be formed from a glass and a metal oxide selected from the group consisting of titanium oxide, silicon oxide, indium oxide, niobium oxide, zinc oxide, antimony oxide, and tungsten oxide. Among these, the metal oxide is preferably titanium oxide or silicon oxide, or both.
The filler (A) having a multilayer structure comprising a metal oxide and glass more preferably constitutes a multilayer structure comprising a glass layer and a metal oxide layer, and is preferably composed of particles in which a middle layer forming the glass layer therein is covered by the metal oxide (preferably titanium oxide, silicon oxide, or both).

The filler (A) having a multilayer structure comprising a metal oxide and mica may be preferably formed from mica and a metal oxide selected from the group consisting of titanium oxide, silicon oxide, indium oxide, niobium oxide, zinc oxide, antimony oxide, and tungsten oxide, among which titanium oxide is preferred as the metal oxide. The filler (A) having a multilayer structure comprising a metal oxide and mica more preferably constitutes a multilayer structure comprising a mica layer and a metal oxide layer, and is preferably composed of particles in which a middle layer forming the mica layer therein is covered by the metal oxide (preferably titanium oxide).

The filler (A) may have a polygonal shape, such as spherical or square prism shape, a polygonal pyramid shape such as a triangular pyramid or square pyramid shape, or any other shape such as cylindrical, conical, irregular, needle shape, fibrous, or flat plate shape, but a flat plate shape is preferred. By having a flat plate shape, the filler (A) can be oriented along a planar direction of the interlayer film, as will be described later, making it easier to increase transparency of the interlayer film while reflecting a fixed quantity of incident visible light rays. Furthermore, regular reflection is produced so that light scattering is less likely to occur, and the haze of the laminated glass is readily reduced.

When the flat plate-shaped filler (A) has the abovementioned multilayer structure, the plurality of layers are preferably provided along the thickness direction, with 2-5 layers preferably being provided, 2-4 layers more preferably being provided, and 3 layers still more preferably being provided along the thickness direction.
The filler having a multilayer structure emits various colors due to interference of reflected light produced by reflection at interfaces between layers and at the surface of the filler, but by varying the thickness of the layer on the surface side of the multilayer structure (e.g., a coating layer 11 which will be described later), it is possible to vary the color (that is, the a* and b* values) of reflected light from the filler.

Fig. 2 shows a specific example of a flat plate-shaped filler (A) having a three-layer structure. When the filler (A) has a three-layer structure, it may preferably comprise a middle layer 10 and coating layers 11, 12 provided on both faces of the middle layer 10, as shown in fig. 2. The filler shown in fig. 2 may have a metal oxide multilayer structure, with the metal oxides forming the coating layers 11, 12 being different from the metal oxide forming the middle layer 10. The metal oxides forming the coating layers 11, 12 are preferably the same metal oxide.
The refractive index of the metal oxide forming the coating layers 11, 12 is preferably higher than the refractive index of the middle layer 10. Setting a relatively high refractive index for the coating layers 11, 12 facilitates light transmission with a suitable level of reflection, thereby improving both transparency and metallic appearance of the interlayer film. Furthermore, a three-layer structure where the refractive index of the metal oxide in the coating layers 11, 12 is higher than the refractive index of the middle layer 10 produces a suitable level of reflection, whichever of the two surfaces light enters from, therefore making it possible to produce a metallic appearance while more effectively maintaining transparency. It should be noted that the preferred value for the difference in the refractive indices of the coating layers 11, 12 and the middle layer 10 is as described above.
Furthermore, the thickness of each of the coating layers 11, 12 is preferably smaller than the thickness of the middle layer 10. The specific preferred value of the thickness ratio (each coating layer:middle layer) is as stated for the thickness ratio between layers.

In the flat plate-shaped filler (A) having a multilayer structure comprising a metal oxide, it is especially preferable for the coating layers 11, 12 to both be titanium oxide layers, and for the middle layer 10 to be a silicon oxide layer. Note that the flat plate-shaped filler (A) is not limited to having a three-layer structure, and may equally have a two-layer structure, in which case one of the coating layers 11, 12 may be omitted. A multilayer structure comprising four or more layers is equally possible.

The average particle size (D50) of each filler (A) is 1 µm or greater and 100 µm or less, preferably 3 µm or greater and 90 µm or less, and more preferably 5 µm or greater and 80 µm or less.
Furthermore, the average particle size of the filler (A) having a multilayer structure comprising a metal oxide is preferably 1 µm or greater and 20 µm or less, preferably 3 µm or greater and 18 µm or less, and more preferably 5 µm or greater and 16 µm or less, from the perspective of more easily inhibiting light scattering in the interlayer film while also achieving a balance between transparency and metallic appearance.
Moreover, the particle size (D50) is a value measured using a laser diffraction/scattering particle size distribution measurement apparatus, and the value (D50) for a cumulative volume of 50% is taken as the average particle size.

The thickness of the filler (A) is preferably 0.01 µm or greater and 4 µm or less, more preferably 0.1 µm or greater and 3.5 µm or less, and even more preferably 0.2 µm or greater and 3 µm or less, from the perspective of easily maintaining transparency and readily producing a metallic appearance. The thickness of the filler (A) is the average of a value measured by scanning electron microscope (SEM), etc. observation of any 50 particles. The thickness of the filler (A) may be the length in a direction having the shortest maximum length value in a direction perpendicular to a longitudinal direction of the filler; the thickness of the flat plate-shaped filler (A) is the vertical length in fig. 2.

The aspect ratio of the filler (A) is preferably 1 or greater, more preferably 1.1 or greater, and even more preferably 1.2 or greater, and is preferably 50 or less, more preferably 30 or less, even more preferably 15 or less, and still more preferably 10 or less. An aspect ratio such as described above makes it easier to produce a metallic appearance while improving transparency. Furthermore, orienting the filler (A) along a planar direction of the interlayer film, as will be described later, makes it easier to further increase transparency of the interlayer film while reflecting a fixed quantity of incident visible light rays. Furthermore, an aspect ratio of 50 or less makes it possible to prevent a needless increase in the particle size (D50) of the filler (A). It should be noted that the aspect ratio of the filler (A) is a ratio of the length of a major axis to the length of a minor axis of the filler (A) observed by means of a scanning electron microscope. Moreover, the major axis and the minor axis are the major axis and the minor axis of the filler (A) as seen in a plane along the thickness direction, and this means the longitudinal direction and a direction perpendicular thereto, in the planar direction of the flat plate-shaped filler.

When the filler (A) has anisotropy which can be oriented, such as when it has a flat plate shape, the longitudinal direction thereof is preferably oriented to lie along the planar direction of the interlayer film. Furthermore, in the case of a flat plate shape, the planar direction of the filler (A) is preferably oriented along the planar direction of the interlayer film. That is to say, the flat plate-shaped filler (A) is preferably oriented so that the thickness direction of the filler (A) lies along the thickness direction of the interlayer film. A filler (A) having the orientation above is capable of partially transmitting, while also suitably reflecting, light which advances through the interlayer film along the thickness direction, and is also capable of suppressing light scattering produced by the filler (A). It is therefore easier to further reduce the haze and improve transparency.
Two or more types of fillers (A) may be used together in the first resin layer; two types of fillers (A) may be used together, or three or more types of fillers (A) may be used together.

There is no particular limitation as to the method for producing the filler (A), and a filler (A) having a multilayer structure may be produced by coating particles formed from a metal oxide with another metal oxide, or by coating particles formed from mica or glass with a metal oxide. Furthermore, a sheet formed from a metal oxide may be coated with another metal oxide and then ground, etc. in order to obtain a flat plate-shaped filler (A). A commercially available product may also be used for the filler (A).

The two or more types of fillers (A) may each have a* of reflected light of -11.0 or greater and 9.0 or less, and b* of -10 or greater and 10 or less, and may more preferably each have a* of reflected light of -9.0 or greater and 7.0 or less, and b* of -8.5 or greater and 8.5 or less. The a* and b* values of the two or more types of fillers (A) being in the ranges above makes it easier to obtain a metallic appearance with a high-class feel.
The a* and b* values of reflected light in each filler may be adjusted by the material, structure and size, etc. of the filler. For example, in the case of a filler having a multilayer structure, as described above, the thickness of each layer such as the coating layers may be suitably adjusted in order to obtain a filler having the desired a* and b* values of reflected light.

It should be noted that the a* and b* values of reflected light in the multiple types of fillers will sometimes be described below, for simplicity, as Ra* (F1) and Rb* (F1) for a first type of filler (also referred to as a first filler), and Ra* (F2) and Rb* (F2) for a second type of filler (also referred to as a second filler).
Moreover, the a* and b* values of reflected light in each filler are the a* and b* values of reflected light as measured with respect to laminated glass manufactured by producing an interlayer film containing 0.05 mass% of filler, and bonding two reference glass sheets together with the resulting interlayer film therebetween. Here, laminated glass and an interlayer film produced under the conditions disclosed in the examples may be used.
Furthermore, a* and b* in the present specification are the chromaticity a* and b* in the L*a*b* color space.

The two or more types of fillers (A) may include two or more types having different colors of reflected light, and preferably include at least two types of fillers having complementary colors of reflected light. When the first resin layer contains multiple types of fillers having different colors, and especially complementary colors, then the colors of the fillers readily cancel each other out, making it easier to produce a metallic appearance with a high-class feel and an intense gray color. In addition, it is easy to achieve flat reflectance in the spectral reflectance curve at wavelengths of 400-700 nm, and it is also easy to reduce Rmax/Rmin.

Here, the two types of fillers (first and second fillers) having complementary colors do not need to have a strictly complementary color relationship, it is sufficient that they are mixed for use so that the chroma after mixing is lower than the chroma of both of the fillers. Furthermore, the two types of fillers (first and second fillers) having complementary colors should have inverse signs (+, -) for both a* and b* of reflected light. That is to say, if one of the fillers having complementary colors has an a* value of reflected light which is "+", then the other filler should have an a* value for reflected light which is "-", and if one of the fillers having complementary colors has a b* value of reflected light which is "+", then the other filler should have a b* value for reflected light which is "-".

Furthermore, for any two types of fillers (first and second fillers), the absolute value of a value obtained by adding a* of reflected light (|Ra* (F1) + Ra* (F2)|) is 0 or greater and 5.0 or less, and the absolute value of a value obtained by adding b* of reflected light (|Rb* (F1) + Rb* (F2)|) is 0 or greater and 9.0 or less. The two types of fillers having the relationship above have a complementary color relationship, one canceling out the coloring of the other, or even without a complementary color relationship, coloring is not readily imparted by the fillers. It is therefore easy to produce a metallic appearance with a high-class feel and an intense gray color by means of the fillers (A). Furthermore, a flat reflectance is easily achieved in the spectral reflectance curve at wavelengths of 400-700 nm.
Here, more preferably, (|Ra* (F1) + Ra* (F2)|) is 0 or greater and 3.0 or less and (|Rb* (F1) + Rb* (F2)|) is 0 or greater and 7.0 or less, and even more preferably, (|Ra* (F1) + Ra* (F2)|) is 0 or greater and 3.0 or less and (|Rb* (F1) + Rb* (F2)|) is 0 or greater and 3.0 or less.
It should be noted that the signs (+, -) of at least either one of Ra* (F1) and Ra* (F2), and Rb* (F1) and Rb* (F2) in the two types of fillers satisfying the relationship above are preferably inverse, as described above, but the signs of both are more preferably inverse.

Furthermore, for the two or more types of fillers (A), the content of each filler (e.g., each of the first filler and the second filler) is preferably 0.004 mass% or greater and 0.4 mass% or less, based on the total amount of the first resin layer. When the content of each filler is 0.004 mass% or greater, then a metallic appearance is readily produced, as appropriate. Furthermore, by setting the content at 0.4 mass% or less, needless reflection of light by the first resin layer is prevented, lowering the haze and readily maintaining transparency of the laminated glass. From these perspectives, the content of each filler (A) is more preferably 0.01 mass% or greater, even more preferably 0.02 mass% or greater, and still more preferably 0.03 mass% or greater, and is more preferably 0.3 mass% or less, even more preferably 0.2 mass% or less, and still more preferably 0.1 mass% or less.

Furthermore, a content ratio (mass ratio) of the second filler to the first filler (second filler/first filler) in the first resin layer is preferably 1/8 or greater and 8/1 or less, more preferably 1/4 or greater and 4/1 or less, and even more preferably 1/2 or greater and 2/1 or less. By setting the content ratio in the range above, an achromatic metallic appearance with an intense impression of gray color is readily demonstrated.

The total content of fillers (A) in the first resin layer is preferably 0.01 mass% or greater and 0.6 mass% or less based on the total amount of the first resin layer. When the total content is set at 0.01 mass% or greater, then a metallic appearance is readily produced, as appropriate. Furthermore, by setting the total content at 0.6 mass% or less, needless reflection of light by the first resin layer is prevented, lowering the haze and readily maintaining transparency of the laminated glass. From these perspectives, the content of the fillers (A) is more preferably 0.02 mass% or greater, even more preferably 0.04 mass% or greater, and still more preferably 0.06 mass% or greater, and is more preferably 0.5 mass% or less, even more preferably 0.35 mass% or less, and still more preferably 0.2 mass% or less.

### (Colorant)

The first resin layer may contain a colorant so as to form a colored layer. The first resin layer containing a colorant makes it possible to impart a color corresponding to the colorant while retaining a metallic appearance with an impression of gray color due to reflected light from the fillers (A). A colored metallic appearance with an impression of depth can therefore be produced by virtue of the first resin layer containing a colorant.

The colorant should be dispersed in the resin of the first resin layer. Furthermore, the colorant is preferably mixed into the first resin layer separately from the filler (A), but the colorant may equally be mixed into the first resin layer while adhered to the surface of the filler.

A pigment or dye, etc. which is blended with conventional interlayer films for laminated glass may be used as the colorant. A pigment is suitable as the colorant from the perspective of enabling efficient coloration with a small blending amount. Examples of pigments which may be cited include: phthalocyanine, anthraquinone, perylene, azo compounds, carbon black, quinacridone, titanium oxide, diketopyrrolopyrrole, thioindigo, Ni complexes, perinone, isoindoline, quinophthalone, threne, dioxazine, pyrrocoline, calcium carbonate, etc., and derivatives thereof.
Among these, colorants having a color such as a blue colorant or a red colorant, i.e., colorants other than white colorants and black colorants, are preferred from the perspective of enhancing design properties. Furthermore, a colorant which has a high affinity with thermoplastic resins and does not readily bleed out is preferred. Specifically, it is more preferable to select at least one from among: a phthalocyanine-based pigment, namely phthalocyanine or a derivative of phthalocyanine, an anthraquinone-based pigment, namely anthraquinone or a derivative of anthraquinone, a perylene-based pigment, namely perylene or a derivative of perylene, an azo-based pigment, namely an azo compound, or a quinacridone-based pigment, namely quinacridone or a derivative of quinacridone.
One type of colorant may be used alone in the first resin layer, or two or more types of colorants may be used together.

When the first resin layer contains a colorant, the content of the colorant is preferably 0.0001 mass% or greater and 0.2 mass% or less based on the total amount of the first resin layer. By setting the content of the colorant in the range above, it is possible to maintain favorable transparency, etc., while also producing a metallic appearance with an appropriate color. The content of the colorant in the first resin layer is more preferably 0.001 mass% or greater, even more preferably 0.005 mass% or greater, and still more preferably 0.01 mass% or greater, and is more preferably 0.1 mass% or less, even more preferably 0.05 mass% or less, still more preferably 0.03 mass% or less, and particularly preferably 0.02 mass% or less.

However, the first resin layer may also be substantially free from a colorant. The first resin layer being substantially free from a colorant makes it easier for light transmitted or reflected by the first resin layer to demonstrate the hue of the filler (A). It is therefore possible to produce a metallic appearance while inhibiting coloration, and it is easier to achieve a design with a high-class feel. It should be noted that "substantially free from a colorant" means that no colorant is intentionally blended with the first resin layer, and the specific colorant content of the first resin layer is less than 0.0001 mass%, preferably less than 0.00001 mass%, and most preferably 0 mass%, for example.

### [Optical Characteristics of First Resin Layer]

The chroma Rc* of reflected light in the visible light region (380-780 nm) of the first resin layer is preferably 0 or greater and 8.0 or less. The chroma Rc* being 8.0 or less enables reflected light with an intense gray color to be formed by the first resin layer, which therefore makes it easier to produce a metallic appearance with a high-class feel. The chroma Rc* of reflected light is more preferably 5.5 or less, and even more preferably 4.0 or less. The chroma Rc* of reflected light is advantageously a lower value, and a value of 0 or greater is sufficient from the perspective of obtaining reflected light with a more intense gray color.

The chroma Tc* of transmitted light in the visible light region (380-780 nm) of the first resin layer is preferably 0 or greater and 8.0 or less. The chroma Tc* being 8.0 or less enables transmitted light with limited coloring to be formed by the first resin layer so that no unnecessary hue is imparted when a viewer looks outdoors through the laminated glass from indoors, and a higher-class laminated glass can be achieved. The chroma Tc* of transmitted light is more preferably 5.5 or less, and even more preferably 4.0 or less. The chroma Tc* of transmitted light is advantageously a lower value from the perspective of limiting coloration of transmitted light, a value of 0 or greater is sufficient, as described above, but there may be at least a certain amount of chroma Tc*, from the perspective of enhancing design properties by imparting a certain amount of coloration, and the chroma Tc* may be 1 or greater, or may be 2 or greater, for example.

The haze (Haze) of the first resin layer is preferably 12.0% or less, more preferably 11.0% or less, even more preferably 10.0% or less, and is preferably 1.5% or greater, more preferably 2.0% or greater, and even more preferably 3.0% or greater. When the haze (Haze) of the first resin layer is 12.0% or less, this makes it easier to increase transparency without producing needless light scattering in the first resin layer. A value of 1.5% or greater makes it easier for a metallic appearance with a high-class feel to be produced by the first resin layer. At least any of the chroma Rc* of reflected light, the chroma Tc* of transmitted light, and the haze (Haze) of the first resin layer may be preferably within the range given above, but all of these values are preferably within the ranges given above.
It should be noted that the optical characteristics (Rc*, Tc*, Haze) of the first resin layer are the values of Rc*, Tc* and Haze as measured with respect to laminated glass manufactured by bonding two reference glass sheets together with the first resin layer therebetween. The laminated glass may be produced by the method disclosed in the examples.

### <Second Resin Layer>

The interlayer film according to the present invention preferably contains a resin layer (second resin layer) in addition to the first resin layer. The second resin layer preferably contains a colorant so as to form a colored layer. The second resin layer containing a colorant makes it easier to color the interlayer film with a desired color and to impart greater design properties. Furthermore, the second resin layer containing a colorant enables light reflected by the filler (A) to be absorbed by the second resin layer, therefore inhibiting light from being emitted from the second resin layer side of the interlayer film. Therefore, the metallic appearance can be enhanced by reflected light if the interlayer film is viewed from the first resin layer side, while the metallic appearance can be inhibited if the interlayer film is viewed from the second resin layer side, for example. Accordingly, if the first resin layer is arranged on the outdoor side (e.g., the exterior side of the vehicle in the case of an automobile) and the second resin layer is arranged on the indoor side (e.g., inside the vehicle compartment in the case of an automobile), it is possible to achieve a subdued impression when the laminated glass is seen from indoors, while enhancing the metallic appearance when the laminated glass is seen from outdoors, and this makes it possible to further enhance the design properties.

### (Colorant)

A pigment or dye which is blended with conventional interlayer films for laminated glass may be used as the colorant employed in the second resin layer. The colorant in the second resin layer may be dispersed in the resin constituting the second resin layer. Furthermore, a pigment is suitable as the colorant from the perspective of enabling efficient coloration with a small blending amount. Specific examples of pigments are as listed above for the first resin layer, but from the perspective of high affinity with thermoplastic resins and reduced likelihood of bleeding out, the pigment is more preferably at least one selected from: a phthalocyanine-based pigment, an anthraquinone-based pigment, a perylene-based pigment, an azo-based pigment, a quinacridone-based pigment, or carbon black.

Furthermore, a black colorant is preferred, and carbon black is especially preferred among those, from the perspective of enhancing design properties by imparting an appearance of higher class. One type of colorant may be used alone in the second resin layer, or two or more types of colorants may be used together.

The content of the colorant in the second resin layer is preferably 0.0001 mass% or greater and 0.3 mass% or less. When the content is 0.0001 mass% or greater, light reflected by the filler (A) is sufficiently absorbed by the colorant, and a sufficient metallic appearance can be produced when the laminated glass is viewed from one side, while the metallic appearance can be limited so as to achieve a subdued impression when the laminated glass is viewed from the other side. Furthermore, by setting the content of the colorant at 0.3 mass% or less, needless absorption of light by the colorant is prevented, and it is easy to maintain clarity, etc. of the laminated glass. From this perspective, the content of the colorant is more preferably 0.001 mass% or greater, even more preferably 0.005 mass% or greater, and still more preferably 0.01 mass% or greater, and is more preferably 0.1 mass% or less, even more preferably 0.08 mass% or less, and still more preferably 0.04 mass% or less.

However, the second resin layer may also be a clear layer substantially free from a colorant. When the second resin layer is a clear layer, the coloring afforded by the filler (A) readily produces the color of the transmitted light without any modification, and it is easy to produce a metallic appearance with an intense impression of gray color. It should be noted that "substantially free from a colorant" means that no colorant is intentionally blended with the second resin layer, and the colorant content of the second resin layer is less than 0.0001 mass%, preferably less than 0.00001 mass%, and most preferably 0 mass%, for example.

### [Thermoplastic Resin]

The resin constituting the first resin layer is preferably a thermoplastic resin. Furthermore, the resin constituting the second resin layer is preferably a thermoplastic resin. The first resin layer or the second resin layer containing a thermoplastic resin makes it easier to fulfill a function as an adhesion layer, improving the adhesion with the laminated glass members and other layers constituting the interlayer film.

There is no particular limitation as to the thermoplastic resin in each of the resin layers, and examples which may be cited include: polyvinyl acetal resin, ethylene-vinyl acetate copolymer resin, ionomer resin, polyurethane resin, thermoplastic elastomer, acrylic resin, acrylic-vinyl acetate copolymer resin, polyvinyl alcohol resin, polyolefin resin, polyvinyl acetate resin, and polystyrene resin, etc. Using these resins makes it easier to maintain adhesion with the laminated glass members.
Among these, polyvinyl acetal resin, ethylene-vinyl acetate copolymer resin, ionomer resin, polyurethane resin, and thermoplastic elastomer are preferred.
One type of thermoplastic resin may be used alone in the interlayer film of the present invention, or two or more may be used together. Note that when two or more types of thermoplastic resins are used, the two or more types of thermoplastic resins may be incorporated into one resin layer (the first or second resin layer), or a different type of thermoplastic resin may be incorporated into each different resin layer (the first and second resin layers).
Among these, at least one selected from polyvinyl acetal resin and ethylene-vinyl acetate copolymer resin is preferred, and, when used in conjunction with a plasticizer in particular, polyvinyl acetal resin is more preferred from the perspective of demonstrating superior adhesion with inorganic glass.
Accordingly, the resin in the first resin layer or the resin in the first and second resin layers is more preferably at least one selected from polyvinyl acetal resin and ethylene-vinyl acetate copolymer resin, with polyvinyl acetal resin being more preferred.

Furthermore, the resins constituting each of the resin layers may be selected, as appropriate, from the resins listed above. Furthermore, the resins constituting each of the resin layers may be different resins, but are preferably the same resin.
Accordingly, both of the resins constituting the first and second resin layers are preferably polyvinyl acetal resin or ethylene-vinyl acetate copolymer resin, with both more preferably being polyvinyl acetal resin.

### (Polyvinyl Acetal Resin)

There is no particular limitation as to the polyvinyl acetal resin, provided that it is a polyvinyl acetal resin obtained by acetalization of a polyvinyl alcohol (PVA) with an aldehyde.

There is no particular limitation as to the aldehyde, but a C1-C10 aldehyde is preferably used in general. There is no particular limitation as to the C1-C10 aldehyde, and examples thereof which may be cited include: n-butyl aldehyde, isobutyl aldehyde, n-valeraldehyde, 2-ethylbutyl aldehyde, n-hexyl aldehyde, n-octyl aldehyde, n-nonyl aldehyde, n-decyl aldehyde, formaldehyde, acetaldehyde, and benzaldehyde, etc. These aldehydes may be used alone, or two or more types may be used together.

Among those described above, n-butyl aldehyde, n-hexyl aldehyde, and n-valeraldehyde are preferred, with n-butyl aldehyde being more preferred. A polyvinyl butyral resin is therefore suitable as the polyvinyl acetal resin.

Polyvinyl alcohol (PVA) is obtained by saponification of a polyvinyl ester such as polyvinyl acetate, for example. Polyvinyl alcohol generally has a degree of saponification of 70-99.9 mol%. One type of polyvinyl acetal resin may be used alone, or two or more types may be used together.
The average degree of polymerization of the PVA is preferably 200 or greater, more preferably 500 or greater, even more preferably 1000 or greater, and still more preferably 1500 or greater. The penetration resistance of the laminated glass increases when the average degree of polymerization is equal to or greater than the lower limits above. Furthermore, the average degree of polymerization of the PVA is preferably 5000 or less, more preferably 4000 or less, even more preferably 3500 or less, and still more preferably 2500 or less.
It should be noted that the average degree of polymerization of the polyvinyl alcohol is obtained by means of a method conforming to JIS K6726 "Polyvinyl alcohol test method".

The hydroxyl group amount of the polyvinyl acetal resin is preferably 15 mol% or greater, and is also preferably 38 mol% or less. A hydroxyl group amount of 15 mol% or greater makes it easy to improve adhesion, and also makes it easy to improve penetration resistance, etc. of the laminated glass. Furthermore, a hydroxyl group amount of 38 mol% or less prevents the laminated glass from becoming excessively hard. From the perspective of adhesion with the laminated glass members, etc., the hydroxyl group amount is more preferably 20 mol% or greater and even more preferably 25 mol% or greater. Furthermore, the hydroxyl group amount is more preferably 35 mol% or less, and even more preferably 33 mol% or less.
When polyvinyl butyral resin is used as the polyvinyl acetal resin also, the hydroxyl group amount is 15 mol% or greater, and is preferably 38 mol% or less, from the same perspective, and is more preferably 20 mol% or greater, and even more preferably 25 mol% or greater, and more preferably 35 mol% or less, and even more preferably 33 mol% or less.
The hydroxyl group amount of the polyvinyl acetal resin is a percentage value expressing a molar fraction obtained by dividing the quantity of ethylene groups to which a hydroxyl group is bonded by the total quantity of ethylene groups in the main chain. The quantity of ethylene groups to which a hydroxyl group is bonded may be measured in accordance with JIS K6728 "Polyvinyl butyral test method", for example.

The degree of acetalization of the polyvinyl acetal resin is preferably 47 mol% or greater, and preferably 85 mol% or less. The degree of acetalization is more preferably 55 mol% or greater and even more preferably 60 mol% or greater, and is more preferably 80 mol% or less, and even more preferably 75 mol% or less.
It should be noted that the degree of acetalization means the degree of butyralization when the acetal groups are butyral groups and the polyvinyl acetal resin (A) is polyvinyl butyral resin.

The degree of acetalization is a percentage value expressing a molar fraction obtained by dividing [a value obtained by subtracting, from the total quantity of ethylene groups in the main chain, the quantity of ethylene groups to which a hydroxyl group is bonded and the quantity of ethylene groups to which an acetyl group is bonded] by the total quantity of ethylene groups in the main chain. The degree of acetalization (butyralization) may be calculated from a result measured by means of a method conforming to JIS K6728 "Polyvinyl butyral test method", for example.

The degree of acetylation of the polyvinyl acetal resin is preferably 30 mol% or less, more preferably 20 mol% or less, even more preferably 10 mol% or less, and still more preferably 2 mol% or less. When the degree of acetylation is equal to or less than the upper limits above, the moisture resistance of the interlayer film and the laminated glass is enhanced. Furthermore, there is no particular limitation as to the degree of acetylation , but it is preferably 0.01 mol% or greater and more preferably 0.1 mol% or greater.
The degree of acetylation is a percentage value expressing a molar fraction obtained by dividing the quantity of ethylene groups to which an acetyl group is bonded by the total quantity of ethylene groups in the main chain. The quantity of ethylene groups to which an acetyl group is bonded may be measured in accordance with JIS K6728 "Polyvinyl butyral test method", for example.

### (Ethylene-Vinyl Acetate Copolymer Resin)

The ethylene-vinyl acetate copolymer resin may be a non-crosslinked ethylene-vinyl acetate copolymer resin or a high-temperature crosslinked ethylene-vinyl acetate copolymer resin. Furthermore, the ethylene-vinyl acetate copolymer resin which is used may also be a modified ethylene-vinyl acetate resin, such as an ethylene-vinyl acetate copolymer saponified product or an ethylene-vinyl acetate hydrolysate.

The ethylene-vinyl acetate copolymer resin preferably has a vinyl acetate content of 10-50 mass%, and more preferably 20-40 mass%, as measured in accordance with JIS K 6730 "Ethylene-vinyl acetate resin test method" or JIS K 6924-2:1997. Making the vinyl acetate content equal to or greater than the lower limit values facilitates greater adhesion with the laminated glass members and also makes it easier to improve penetration resistance of the laminated glass. Furthermore, making the vinyl acetate content equal to or less than the upper limit values increases breaking strength of the interlayer film and also improves impact resistance of the laminated glass.

### (Ionomer Resin)

There is no particular limitation as to the ionomer resin, and various ionomer resins may be used. Specific ionomers which may be cited include: ethylene-based ionomers, styrene-based ionomers, perfluorocarbon-based ionomers, telechelic ionomers, and polyurethane ionomers, etc. Among these, ethylene-based ionomers are preferred from the perspective of improving mechanical strength, durability and clarity etc. of the laminated glass, and from the perspective of achieving excellent adhesion with the laminated glass members.

An ionomer of an ethylene-unsaturated carboxylic acid copolymer is suitably used as an ethylene-based ionomer because of its excellent clarity and toughness. The ethylene-unsaturated carboxylic acid copolymer is a copolymer having at least a structural unit derived from ethylene and a structural unit derived from an unsaturated carboxylic acid, and it may also comprise structural units derived from other monomers.
Acrylic acid, methacrylic acid and maleic acid, etc. may be cited as unsaturated carboxylic acids, with acrylic acid and methacrylic acid being preferred, and methacrylic acid being particularly preferred. Furthermore, other monomers which may be cited include acrylic acid esters, methacrylic acid esters, and 1-butene, etc.
If the total of structural units of the ethylene-unsaturated carboxylic acid copolymer are assumed to constitute 100 mol%, then the copolymer preferably has 75-99 mol% of structural units derived from ethylene and preferably has 1-25 mol% of structural units derived from unsaturated carboxylic acid.
The ionomer of the ethylene-unsaturated carboxylic acid copolymer is an ionomer resin obtained by neutralizing or crosslinking, with metal ions, at least a portion of the carboxyl groups of the ethylene-unsaturated carboxylic acid copolymer, with the degree of neutralization of the carboxyl groups normally being 1-90%, and preferably 5-85%.

Ion sources in the ionomer resin which may be cited include alkali metals such as lithium, sodium, potassium, rubidium, and cesium, and polyvalent metals such as magnesium, calcium, and zinc, with sodium and zinc being preferred.

There is no particular limitation as to the method for producing the ionomer resin, and it may be produced by a conventionally well-known production method. For example, when an ionomer of an ethylene-unsaturated carboxylic acid copolymer is used as the ionomer resin, ethylene and an unsaturated carboxylic acid are subjected to radical copolymerization under a high temperature and a high pressure to produce an ethylene-unsaturated carboxylic acid copolymer, for example. This ethylene-unsaturated carboxylic acid copolymer and a metal compound comprising the abovementioned ion source are then reacted, whereby it is possible to produce an ionomer of the ethylene-unsaturated carboxylic acid copolymer.

### (Polyurethane Resin)

A polyurethane obtained by reacting an isocyanate compound and a diol compound, and a polyurethane obtained by reacting an isocyanate compound, a diol compound, and a chain extender such as a polyamine, may be cited among others as the polyurethane resin. Furthermore, the polyurethane resin may contain sulfur atoms. In that case, a part or all of the diol may be selected from a polythiol and a sulfur-containing polyol. The polyurethane resin is capable of improving adhesion with organic glass. A polyurethane resin is therefore advantageously used when the laminated glass members are organic glass.

### (Thermoplastic Elastomer)

A styrene-based thermoplastic elastomer and an aliphatic polyolefin may be cited as thermoplastic elastomers. There is no particular limitation as to the styrene-based thermoplastic elastomer, and a well-known substance may be used. Styrene-based thermoplastic elastomers generally comprise a styrene monomer polymer block constituting a hard segment, and a conjugated diene compound polymer block or hydrogenated block thereof constituting a soft segment. Specific examples of styrene-based thermoplastic elastomers that may be cited include: styrene-isoprene diblock copolymer, styrene-butadiene diblock copolymer, styrene-isoprene-styrene triblock copolymer, styrene-butadiene/isoprene-styrene triblock copolymer, styrene-butadiene-styrene triblock copolymer, and hydrogenated forms thereof.

The abovementioned aliphatic polyolefin may be a saturated aliphatic polyolefin or an unsaturated aliphatic polyolefin. The aliphatic polyolefin may be a polyolefin having a straight-chain olefin as the monomer, or may be a polyolefin having a cyclic olefin as the monomer. The aliphatic polyolefin is preferably a saturated aliphatic polyolefin from the perspective of effectively improving storage stability of the interlayer film and soundproofing properties. Aliphatic polyolefin materials that may be cited include: ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane, etc.

### (Plasticizer)

The interlayer film may further contain a plasticizer. As mentioned above, the interlayer film comprises one or more resin layers, but each resin layer (that is, the first resin layer or each of the first and second resin layers, for example) may also contain a plasticizer in addition to a thermoplastic resin.

Each resin layer is flexible by virtue of containing a plasticizer, and, as a result, the flexibility of the laminated glass is improved, and penetration resistance is also improved. Additionally, it is also possible to improve adhesion with the laminated glass members. The plasticizer is especially effective if it is incorporated when a polyvinyl acetal resin is used as the thermoplastic resin. The first resin layer, or each resin layer such as the first and second resin layers, therefore more preferably contains a polyvinyl acetal resin and a plasticizer. Examples of plasticizers that may be cited include: organic ester plasticizers such as monobasic organic acid esters and polybasic organic acid esters, and phosphorus-based plasticizers such as organophosphate-based plasticizers and organophosphite-based plasticizers. Among these, organophosphate-based plasticizers are preferred.

Examples of organic ester plasticizers that may be cited include: triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, oil-modified sebacic acid alkyd, a mixture of phosphoric acid ester and adipic acid ester, and mixed adipic acid esters, etc. Examples of mixed adipic acid esters that may be cited include adipic acid esters prepared from two or more alcohols selected from C4-C9 alkyl alcohols and C4-C9 cyclic alcohols.
Among the plasticizers mentioned above, triethylene glycol di-2-ethylhexanoate (3GO) is especially preferably used.

There is no particular limitation as to the plasticizer content in each of the resin layers (e.g., the first resin layer or each of the first and second resin layers), but it is preferably 10 parts by mass or greater and 100 parts by mass or less with respect to 100 parts by mass of the thermoplastic resin. When the plasticizer content is 10 parts by mass or greater, the resin layers are suitably flexible and have better penetration resistance and adhesion, etc. Furthermore, when the plasticizer content is 100 parts by mass or less, separation of the plasticizer from each of the resin layers is prevented. The plasticizer content in each resin layer is more preferably 20 parts by mass or greater, even more preferably 30 parts by mass or greater, and still more preferably 35 parts by mass or greater, and is more preferably 70 parts by mass or less, and even more preferably 63 parts by mass or less.

The first resin layer or each of the first and second resin layers comprises a resin, or a resin and a plasticizer as the main components thereof, and the total amount of thermoplastic resin and plasticizer in each resin layer is normally 70 mass% or greater, preferably 80 mass% or greater, and even more preferably 90 mass% or greater and less than 100 mass%, based on the total amount of resin layer(s). By setting this total amount at less than 100 mass%, the resin layer(s) can contain additives such as the colorant and the filler (A).

### [Other Additives]

Each resin layer according to the present invention may contain additives other than those described above, and may contain additives such as UV absorbers, antioxidants, photostabilizers, adhesive force regulators, heat shielding agents, fluorescent whitening agents, and crystal nucleating agents. The interlayer film according to the present invention comprises one or two or more resin layers, as stated above, and each of the resin layers may contain at least one selected, as appropriate, from the additives above.

### <Layer Configuration>

The layer configuration of the interlayer film according to the present invention will be described in more detail below.

In the present invention, the interlayer film may comprise the first resin layer as a single layer, but it may equally constitute an interlayer film 20 comprising the two layers as shown in fig. 3, which include a first resin layer 21 and a second resin layer 22. The first resin layer 21 and the second resin layer 22 are laminated in a thickness direction. In the two-layer interlayer film 20, the first resin layer 21 constitutes one face 20A (the face on the first resin layer side) of the interlayer film, the second resin layer 22 constitutes the other face 20B (the face on the second resin layer side) of the interlayer film, and these faces form respective bonding faces with laminated glass members (first and second laminated glass members 31, 32) of laminated glass 30. It should be noted that a surface of the first laminated glass member 31 constitutes a face (surface 30A) of the laminated glass 30 on the first resin layer side, and a surface of the second laminated glass member 32 constitutes a face (surface 30B) of the laminated glass on the second resin layer side.

However, the interlayer film may be provided with a plurality of first resin layers and/or second resin layers, for example, a plurality of second layers may be provided to give a three-layer structure such as second resin layer/first resin layer/second resin layer, or a plurality of first resin layers may be provided. Furthermore, second resin layers and first resin layers may be consecutively provided to give a structure such as first resin layer/first resin layer/second resin layer, or first resin layer/second resin layer/second resin layer. Furthermore, the interlayer film may have a structure comprising four or more layers.

### (Soundproofing Performance)

When the interlayer film is provided with a plurality of resin layers and there are at least three resin layers provided, soundproofing performance may be imparted by virtue of a three-layer structure where the resin layer in the center serves as a core layer and the layers on both sides thereof serve as skin layers. In this case, the interlayer film may also contain resin layers other than the two skin layers and the single core layer, as appropriate.

Here, the core layer may be the first resin layer or the second resin layer, but the core layer is preferably the second resin layer. Furthermore, the skin layers may be either of the first resin layer and the second resin layer, but at least one of the skin layers is preferably the first resin layer.

Here, the resins used in the skin layers and the core layer are preferably both polyvinyl acetal resins, and more preferably polyvinyl butyral resins.

The skin layers and the core layer both preferably contain a plasticizer as described above. In that case, the plasticizer content of the core layer with respect to 100 parts by mass of thermoplastic resin is preferably greater than the plasticizer content of the skin layer with respect to 100 parts by mass of thermoplastic resin, and the difference in contents is preferably 5 parts by mass or greater and 60 parts by mass or less, more preferably 10 parts by mass or greater and 50 parts by mass or less, and even more preferably 15 parts by mass or greater and 35 parts by mass or less. By making the plasticizer content of the core layer larger, the soundproofing performance is easily improved.
Furthermore, the hydroxyl group amount of the polyvinyl acetal resin in the core layer is preferably lower than the hydroxyl group amount of the polyvinyl acetal resin in the skin layers, and the difference in hydroxyl group amounts is preferably 1 mol% or greater and 20 mol% or less, more preferably 2 mol% or greater and 15 mol% or less, and even more preferably 2 mol% or greater and 10 mol% or less. The plasticizer content is readily increased and soundproofing performance is also readily improved by making the hydroxyl group amount of the core layer lower.

### (Barrier Layer)

The description given above was based on using the second resin layer as a clear layer or a colored layer, but the second resin layer may also be provided with functions other than that of the clear layer or the colored layer described above, and it may be a barrier layer, for example. The barrier layer is disposed at two resin layers (e.g., between two first resin layers, between two second resin layers, or between a first resin layer and a second resin layer), and prevents components contained in the resin layers (colorant and plasticizer, etc.) from migrating to another resin layer.

When the second resin layer is used as a barrier layer, a well-known resin film may be used as the second resin layer, and examples of films which may be used include: a polyester film such as a polyethylene terephthalate (PET) film, a polyolefin film, a polyamide film, a polyimide film, a polycarbonate film, or an acrylic resin film, etc. Among these, either an acrylic resin film or a PET film is preferably used, with a PET film being more preferred. Moreover, an acrylic polymer comprising a hydroxyl group-containing (meth)acrylate-derived structural unit is preferred as the acrylic resin used in an acrylic resin film, and polyhydroxypropyl methacrylate (HPMA resin) and polyhydroxyethyl methacrylate (HEMA resin) may specifically be cited.

Furthermore, the first resin layer does not need to be provided over the entire region of the interlayer film, and may be provided in a partial region. Similarly, the second resin layer does not need to be provided over the entire region of the interlayer film, and may be provided in a partial region. Furthermore, when a plurality of first resin layers are provided, only some of those first resin layers may be provided in a partial region. Similarly, when a plurality of second resin layers are also provided, only some of those second resin layers may be provided in a partial region.

The second resin layer constituting a colored layer in the interlayer film may preferably be provided in a partial region. For example, when the interlayer film has a laminated structure comprising: first resin layer/second resin layer (clear layer)/second resin layer (colored layer)/second resin layer (clear layer), then the second resin layer (colored layer) may be provided only in a partial region of the interlayer film.
That is to say, the partial region may have a laminated structure comprising: first resin layer/second resin layer (clear layer)/second resin layer (colored layer)/ second resin layer (clear layer), and the remaining region may have a laminated structure comprising: first resin layer/second resin layer (clear layer)/second resin layer (clear layer). In this case, the two second resin layers (clear layers) may form a single element in the region where the second resin layer (colored layer) is not provided, and may thus constitute one second resin layer (clear layer).
Furthermore, for example, in the case of a layer structure comprising: first resin layer/second resin layer (colored layer)/second resin layer (clear layer) also, then the second resin layer (colored layer) may be provided only in a partial region of the interlayer film.
That is to say, the partial region may have a laminated structure comprising: first resin layer/second resin layer (colored layer)/second resin layer (clear layer), and the remaining region may have a laminated structure comprising: first resin layer/second resin layer (clear layer).

Furthermore, for example, the interlayer film may have a layer structure comprising: second resin layer/first resin layer/second resin layer, and the first resin layer may be provided only in a partial region, in which case the partial region may have a laminated structure comprising: second resin layer/first resin layer/second resin layer, and the remaining region may have a structure comprising: second resin layer/second resin layer. In this case, the two second resin layers may form a single element in the region where the first resin layer is not provided, and may thus constitute one second resin layer.

Furthermore, for example, in a laminated structure comprising: second resin layer (clear layer)/first resin layer/second resin layer (clear layer)/second resin layer (colored layer)/second resin layer (clear layer), the first resin layer and the second resin layer (colored layer) may be provided only in a partial region.
That is to say, the partial region may have a laminated structure comprising: second resin layer (clear layer)/first resin layer/second resin layer (clear layer)/second resin layer (colored layer)/second resin layer (clear layer), and the remaining region may have a laminated structure comprising: second resin layer (clear layer)/second resin layer (clear layer)/second resin layer (clear layer). In this case, two or three second resin layers (clear layers) may form a single element in the region without the first resin layer and the second resin layer (colored layer), and may thus constitute one second resin layer (clear layer).

The first and second resin layers may have a constant thickness or a varying thickness. For example, first and second resin layers provided in a partial region of the interlayer film, as described above, may have a cross-sectional shape which decreases in thickness closer toward the region where the first and second resin layers are not provided.

The interlayer film may have a rectangular cross section with a constant thickness, but is not limited to a rectangular cross section and may equally have a wedge-shaped cross section, for example. An interlayer film with a wedge-shaped cross section has a different thickness at one end of the cross section from the other end thereof on the opposite side to said one end, and the cross section may have a trapezoidal shape and may also have a triangular shape. Furthermore, an interlayer film having a wedge-shaped cross section has a varying thickness from one end toward the other end, but it is not necessary for the thickness to vary in all portions thereof, and it may equally have a portion of constant thickness, with a partial portion of varying thickness.

### [Thickness of Layers]

The thickness of the first resin layer is preferably 0.1 mm or greater and 2.5 mm or less, more preferably 0.2 mm or greater and 2.0 mm or less, and even more preferably 0.25 mm or greater and 1.5 mm or less. It is easy to enhance the design properties while ensuring transparency of the interlayer film by adjusting the content of filler (A) in the first resin layer then setting the thickness thereof within the ranges above.

The thickness of the second resin layer is preferably 0.1 mm or greater and 2.5 mm or less, more preferably 0.2 mm or greater and 2.0 mm or less, and even more preferably 0.25 mm or greater and 1.5 mm or less. It is possible to impart various functions without increasing the thickness of the interlayer film any more than necessary by setting the thickness of the second resin layer within the ranges above. Furthermore, the interlayer film can suitably absorb light reflected by the first resin layer and thereby improve transparency from the second resin layer side by making the second resin layer a colored layer, adjusting the colorant content in the colored layer to the ranges given above, and then setting the thickness thereof within the ranges above.

A thickness ratio of the first resin layer to the second resin layer is preferably 10:1-1:50. By setting the thickness ratio within this kind of range, transparency, etc. is maintained, even if the second resin layer is a colored layer, while design properties are also enhanced. From these perspectives, the thickness ratio of the first resin layer to the second resin layer is more preferably 5:1-1:25, and even more preferably 1:1-1:10.

Furthermore, the thickness of the interlayer film is preferably 0.2 mm or greater and 2.6 mm or less, more preferably 0.25 mm or greater and 2.2 mm or less, and even more preferably 0.3 mm or greater and 1.75 mm or less.

It should be noted that the first and second resin layers and the interlayer film sometimes have a varying thickness, as described above, in which case the thickness of the first and second resin layers and the interlayer film described above means the thickness of the part where the first resin layer is thickest in the region where the first resin layer is present. Furthermore, when there are two or more first resin layers, the thickness of the first resin layer means the total thickness thereof, and the same also applies to second resin layers.

### [Optical Characteristics of Interlayer Film]

### (Visible Light Reflectance (Rv))

The interlayer film according to the present invention preferably has visible light reflectance (Rv) of 5% or greater, more preferably 7% or greater, even more preferably 9% or greater, and still more preferably 10% or greater. An Rv of 5% or greater makes it easier for a metallic appearance with a high-class feel to be demonstrated by reflected light. Furthermore, the visible light reflectance (Rv) is preferably 50% or less, more preferably 40% or less, even more preferably 30% or less, and still more preferably 20% or less. An Rv of 50% or less makes it possible to prevent more reflection than necessary, and to prevent a greater reduction in transparency than is necessary.

### (Chroma (Rc*))

The interlayer film according to the present invention may have chroma (Rc*) of reflected light of 20 or less, for example, and preferably 15 or less, more preferably 12 or less, and even more preferably 7.0 or less.

The interlayer film according to the present invention readily produces a metallic appearance with a high-class feel and an intense gray color by virtue of having lower chroma (Rc*) of reflected light. There is no particular limitation as to the lower limit of the chroma (Rc*), a value of 0 or greater is sufficient, and it may be a fixed value or greater, for example 1 or greater or 2 or greater, in order to produce a metallic appearance with constant coloration.

It should be noted that the visible light reflectance (Rv) and the chroma (Rc*) of reflected light of the interlayer film are measured from one face of laminated glass produced by bonding two reference clear glass sheets with the interlayer film therebetween, and these may be preferably measured for the same face as that for which the abovementioned spectral reflectance is measured. When a second resin layer (colored layer) is provided in addition to the first resin layer, values (Rv1, Rc*1) measured from the first resin layer side may be preferably used, as will be described later. Values measured from the first resin layer side are used as the values for reflected light on the assumption that reflected light will mainly be observed from the face on the outdoor side of the laminated glass.

### (Visible Light Transmittance (Tv))

The visible light transmittance (Tv) of the interlayer film according to the present invention is preferably 1% or greater and 90% or less, more preferably 3% or greater and 85% or less, and even more preferably 6% or greater and 80% or less.

The visible light transmittance (Tv) of the interlayer film according to the present invention is lower when a colored layer is provided as the second resin layer (to be described later). The visible light transmittance (Tv) when a colored layer is provided is preferably 1% or greater and 50% or less, preferably 3% or greater and 30% or less, and more preferably 6% or greater and 20% or less. By setting the visible light transmittance (Tv) at 1% or greater, it is possible to ensure constant transparency even if a colored layer is provided as the second resin layer. Furthermore, setting a value of 50% or less makes it easier to demonstrate the effect of providing a colored layer as the second resin layer.

Furthermore, when the interlayer film according to the present invention does not comprise a colored layer as the second resin layer (to be described later), the visible light transmittance (Tv) is preferably 50% or greater and 90% or less, more preferably 60% or greater and 80% or less, and even more preferably 68% or greater and 80% or less. High clarity can be ensured by setting Tv at 50% or greater. Furthermore, by setting Tv at 90% or less, it is easier to produce a metallic appearance with a high-class feel by means of the first resin layer when the interlayer film does not have a colored layer.

### (Chroma (Tc*))

The chroma (Tc*) of transmitted light measured from said other face of the interlayer film according to the present invention may be 35 or less, for example, but is preferably 15 or less, more preferably 12 or less, and even more preferably 7.0 or less. When the interlayer film according to the present invention has lower chroma (Tc*), a high-class appearance is easily produced, without more coloring than necessary being apparent in the laminated glass when seen from inside a vehicle, for example. Furthermore, there is no particular limitation as to the lower limit of chroma (Tc*), a value of 0 or greater is sufficient, but from the perspective of imparting constant coloring to the laminated glass when seen from inside a vehicle, for example, the value may be 1 or greater or 3 or greater.

The visible light transmittance (Tv) and chroma (Tc*) of transmitted light of the interlayer film are measured from one face of laminated glass produced by bonding two reference clear glass sheets with the interlayer film therebetween, and the face on which the measurement is made may be preferably the same as the face on which the haze (Haze) is measured. When a second resin layer (colored layer) is provided in addition to the first resin layer, as will be described later, values (Tv2, Tc*2) measured from the second resin layer side may be preferably used. Values measured from the second resin layer side are used as the values for transmitted light on the assumption that transmitted light will mainly be observed from the face on the indoor side of the laminated glass.

It should be noted that visible light reflectance (Rv) and visible light transmittance (Tv) may be measured in accordance with JIS 3106 (2019) using a spectrophotometer. Furthermore, the chroma (Rc*, Tc*) are values of c* obtained from c* = [(a*)²+(b*)2]^{1/2} by measuring a* (Ra* or Ta*) and b* (Rb* or Tb*) of reflected light or transmitted light in the visible light region (380-780 nm).
Furthermore, visible light reflectance (Rv), chroma (Rc*) of reflected light, visible light transmittance (Tv), and chroma (Tc*) of transmitted light may be adjusted by the type and content of filler (A), and the type and content of colorant contained in the first resin layer and/or the second resin layer, etc.

It should be noted for a configuration where the second resin layer 22 (colored layer) is provided in addition to the first resin layer 21 (see fig. 3), that the phrase "measured from the first resin layer side" in regard to optical characteristics (e.g., Haze, spectral transmittance, Rv, Rc*, Tv and Tc*) means measurement from the surface 30A of the laminated glass on the side of the interlayer film on which the first resin layer 21 is provided. Similarly, the phrase "measured from the second resin layer side" means measurement from the surface 30B of the laminated glass on the side on which the second resin layer 22 (constituting a colored layer) is provided. In this case, a first resin layer 21 and/or a layer other than a colored layer (e.g., a second resin layer (clear layer)) may be provided, as appropriate, further outside the first resin layer 21 and/or the second resin layer 22 (colored layer).
However, in the present invention, there may also be cases where both the side of said one face 20A and the side of said other face 20B are first resin layers (or second resin layers (colored layers)), as with first resin layer/second resin layer/first resin layer, or second resin layer (colored layer)/first resin layer/second resin layer (colored layer). In such cases, it may be assumed that optical characteristics being "measured from the first resin layer side" means measured from either one surface, and "measured from the second resin layer side" means measured from the other surface.
Meanwhile, in a configuration such as first resin layer/second resin layer (colored layer)/first resin layer/second resin layer (colored layer), "measured from the first resin layer side" may be assumed to mean measured from the surface of the laminated glass on the first resin layer side (i.e., the left side). Furthermore, "measured from the second resin layer side" may be assumed to mean measured from the surface of the laminated glass on the second resin layer side (i.e., the right side).

In addition, the reference clear glass sheets used for measuring the haze (Haze), spectral transmittance, visible light reflectance (Rv), chroma (Rc*) of reflected light, visible light transmittance (Tv), and chroma (Tc*) of transmitted light have a thickness of 2.5 mm and visible light transmittance of 90.5%, as measured in accordance with JIS R 3106:1998. Furthermore, the clear glass sheets have values of a*= -0.6, b*= 0.2, and haze of 0.2% or less, obtained using CIE standard illuminant D65 and a 10° field of view color matching function, as defined in JIS Z 8781-1 (2012), JIS Z 8781-2 (2012), and JIS Z 8781-4 (2013). Furthermore, the interlayer film may have a region without the first resin layer, and the thickness of the first and second resin layers may vary, in which case the abovementioned Haze, spectral transmittance, Rv, Tv, Rc* and Tc* should be measured in the same region where the first resin layer has the greatest thickness.

### (Method for Producing Interlayer Film)

There is no particular limitation for the interlayer film of the present invention, but respective resin compositions for forming each of the resin layers may be produced, resin layers may be shaped from the resulting resin compositions, and the plurality of resin layers may be laminated in multiple layers. The resin compositions may each be obtained by mixing the filler (A) or colorant, plasticizer and other additives, which are blended as required, with the thermoplastic resin, for example.

Here, the filler (A) is blended in the first resin layer in addition to the thermoplastic resin, but when a plasticizer is used, for example, from the perspective of improving dispersibility in the resin composition, the filler (A) may be blended with the plasticizer and thoroughly dispersed in the plasticizer, and then mixed with the thermoplastic resin. In this process, a dispersant, etc. may be added to the plasticizer, as appropriate. Furthermore, a colorant may be blended in the second resin layer, in addition to the thermoplastic resin, but when a plasticizer is used, for example, from the perspective of improving dispersibility in the resin composition, the colorant may be blended with the plasticizer and thoroughly dispersed in the plasticizer, and then mixed with the thermoplastic resin. In this process, a dispersant, etc. may be added to the plasticizer, as appropriate.

When additives other than the filler (A) or the colorant are used, depending on the type of additives, the additives may be blended with the plasticizer and thoroughly dispersed in the plasticizer, and then mixed with the thermoplastic resin.

The interlayer film may be shaped by extrusion or press molding, etc. In the case of extrusion where the interlayer film has multiple layers, a preferred method comprises preparing two or more extruders, and performing co-extrusion with a multilayer feed block mounted at tip ends of the multiple extruders. Furthermore, when there are multiple resin layers provided and there are two or more resin layers having the same composition, the two or more resin layers having the same composition may be extruded from one extruder. In addition, the thickness of each resin layer may vary along a direction orthogonal to the thickness direction, in which case the thickness may be varied by adjusting the resin feed amount, etc., for example. Furthermore, the interlayer film may be produced by preparing a plurality of resin layers and arranging this plurality of resin layers between a pair of laminated glass members to obtain a laminate, and then thermocompression bonding (press molding) this laminate to thereby produce laminated glass while also producing the interlayer film at the same time.
It should be noted that when the filler (A) has anisotropy which can be oriented, such as when it has a flat plate shape, the filler (A) may be oriented so that the longitudinal direction or planar direction thereof lies along the planar direction of the interlayer film (resin layers) by means of the press molding or extrusion, etc.

### <Laminated Glass>

The present invention further provides laminated glass. The laminated glass comprises two laminated glass members (first and second laminated glass members) and the interlayer film disposed between these laminated glass members. The two laminated glass members are bonded with the interlayer film therebetween. The interlayer film has one face thereof bonded to one laminated glass member and the other face thereof bonded to the other laminated glass member. The configuration of the interlayer film is as described above.

The laminated glass may be produced by arranging the abovementioned interlayer film between the two laminated glass members and then thermocompression bonding these components to form a single element. Furthermore, the laminated glass may be produced by preparing a plurality of resin layers and arranging this plurality of resin layers between a pair of laminated glass members to obtain a laminate, then thermocompression bonding, etc. this laminate to thereby form a single element.

### (Laminated Glass Members)

Glass sheets may be cited as the laminated glass members used in the laminated glass, and the glass sheets may be either inorganic glass or organic glass, but inorganic glass is preferred. There is no particular limitation as to the inorganic glass, and clear glass, float plate glass, polished plate glass, textured plate glass, mesh plate glass, wired plate glass, and green glass, etc. may be cited.

Furthermore, what is known as resin glass is generally used as organic glass, and there is no particular limitation, but organic glass formed from a resin such as polycarbonate, acrylic resin, acrylic copolymer resin, and polyester may be cited.

The two laminated glass members may be formed by the same type of material or may be formed from different materials. For example, one laminated glass member may be inorganic glass and the other may be organic glass, but both of the two laminated glass members are preferably inorganic glass or organic glass.

Furthermore, there is no particular limitation as to the thickness of each laminated glass member, but the thickness is around 0.1-15 mm, for example, and is preferably 0.5-5 mm. The laminated glass members may have the same thickness as each other, or may have different thicknesses, but they preferably have the same thickness.

The laminated glass has haze (Haze) of 2.0% or greater and 13.0% or less, and has flat reflectance in the spectral reflectance curve at wavelengths of 400-700 nm. By virtue of having the configuration above, the laminated glass can improve transparency while also enhancing design properties by producing a metallic appearance with a high-class feel.
Similarly to the interlayer film described above, the haze of the laminated glass is preferably 12.0% or less, more preferably 11.0% or less, and even more preferably 9.5% or less, and is preferably 3.0% or greater, more preferably 4.0% or greater, and even more preferably 4.5% or less.
It should be noted that the haze of the laminated glass should ideally be obtained by a measurement from either one face of the laminated glass, but when the interlayer film is provided with a second resin layer (colored layer) in addition to the first resin layer, the value (Haze 2) measured from the second resin layer side should be used.

In the spectral reflectance curve at wavelengths of 400-700 nm, Rmax/Rmin, which is a ratio of the maximum value to the minimum value of reflectance of the laminated glass, is preferably 1.6 or less, but is more preferably 1.5 or less, even more preferably 1.4 or less, and still more preferably 1.35 or less. It should be noted that a lower Rmax/Rmin is better, and 1.0 or greater is sufficient.
Furthermore, when the second resin layer (colored layer) is provided in the interlayer film, Rmax/Rmin of the laminated glass is preferably 1.6 or less, more preferably 1.5 or less, and even more preferably 1.4 or less. Meanwhile, when the second resin layer (colored layer) is not provided in the interlayer film, Rmax/Rmin of the laminated glass is relatively small, and it is preferably 1.4 or less, more preferably 1.35 or less, and even more preferably 1.3 or less.

In addition, Rmin of the laminated glass in the spectral reflectance curve at wavelengths of 400-700 nm is, similarly to the interlayer film, preferably 4% or greater, more preferably 6% or greater, and even more preferably 7% or greater, and is preferably 50% or less, more preferably 40% or less, even more preferably 30% or less, and still more preferably 20% or less. Moreover, the spectral reflectance curve should ideally be obtained by measuring the spectral reflectance from either one face of the laminated glass. However, when the interlayer film is provided with the second resin layer (colored layer) in addition to the first resin layer, the spectral reflectance curve should be produced using the spectral reflectance measured from the first resin layer side.
In addition, the preferred ranges of the visible light reflectance (Rv), chroma (Rc*), visible light transmittance (Tv), and chroma (Tc*) of the laminated glass are the same as those described above for the interlayer film and will therefore not be described again.

The laminated glass according to the present invention may be used as window glass or the like in various types of vehicles such as automobiles, transportation vehicles such as aircraft and ships, and buildings, etc., but use as automotive laminated glass is preferred. Automotive laminated glass may be any of windshield glass (front windshield glass), side window glass, rear windshield glass, or roof glass.

For the above applications, the window glass is generally used as a member for partitioning outdoors/indoors. When the first resin layer 21 of the interlayer film is arranged on the side of said one face 20A of the interlayer film 20, and the second resin layer 22 is formed by a colored layer and is arranged on the side of said other face 20B, the face 20A on the first resin layer 21 side of the interlayer film may preferably be arranged on the outdoor side (i.e., the exterior side of the vehicle in the case of an automobile), and the face 20B on the second resin layer 22 side may preferably be arranged on the indoor side (the exterior side of the vehicle in the case of an automobile). In this case, a first resin layer 21 and/or a layer other than a colored layer (e.g., a second resin layer (clear layer)) may be provided, as appropriate, further outside the first resin layer 21 and/or the second resin layer 22 (colored layer).

### EXAMPLES

The present invention will be described in further detail with the aid of examples, but the present invention is in no way limited to these examples.

Measurement methods and evaluation methods in the examples are as follows.

### [Spectral Reflectance at 400-700 nm]

The spectral reflectance was measured from one face of the laminated glass using a spectrophotometer ("U-4100", manufactured by Hitachi High-Tech Corp.). The measurement conditions were a scan speed of 300 nm/min and a slit width of 8 nm, a spectral reflectance curve at wavelengths of 400-700 nm was obtained from the resulting spectral reflectance, and Rmax and Rmin were obtained. Note that Rmax and Rmin in the laminated glass comprising the first resin layer and the second resin layer were obtained by using the spectral reflectance curve obtained by measurement from the face of the laminated glass on the first resin layer side.

### [Rv1 and Rv2]

Rv1 was obtained by measuring visible light reflectance (Rv) from one face of the laminated glass using a spectrophotometer ("U-4100", manufactured by Hitachi High-Tech Corp.) in accordance with JIS 3106 (2019). Furthermore, in the laminated glass comprising the first resin layer and the second resin layer, the visible light reflectance measured from the face of the laminated glass on the first resin layer side was taken as Rv1, and the visible light reflectance measured from the face of the laminated glass on the second resin layer side was taken as Rv2.

### [Ra*1, Rb*1, Rc*1, Ra*2, Rb*2 and Rc*2]

The spectral reflectance was measured from one face of the laminated glass using a spectrophotometer ("U-4100", manufactured by Hitachi High-Tech Corp.). The measurement conditions were a scan speed of 300 nm/min and a slit width of 8 nm, the chromaticity a* and b* with a D65 light source and 10° field of view were obtained from the resulting spectral reflectance in accordance with JIS Z 8781 (2009), chroma c* was further obtained from a* and b*, and the resulting values were taken as Ra*1, Rb*1 and Rc*1, respectively.

Furthermore, in the laminated glass comprising the first resin layer and the second resin layer, a*, b* and c* obtained by measurement from the face of the laminated glass on the first resin layer side were taken as Ra*1, Rb*1 and Rc*1, respectively, while a*, b* and c* obtained by measurement from the face of the laminated glass on the second resin layer side were taken as Ra*2, Rb*2 and Rc*2, respectively.

### [Tv1 and Tv2]

Tv1 was determined by obtaining the visible light transmittance from one face of the laminated glass using a spectrophotometer ("U-4100", manufactured by Hitachi High-Tech Corp.), in accordance with JIS R 3212 (2015).

Furthermore, in the laminated glass comprising the first resin layer and the second resin layer, the visible light transmittance obtained by measurement from the face of the laminated glass on the first resin layer side was taken as Tv1, while the visible light transmittance obtained by measurement from the face of the laminated glass on the second resin layer side was taken as Tv2.

### [Ta*1, Tb*1, Tc*1, Ta*2, Tb*2 and Tc*2]

The spectral transmittance was measured from one face of the laminated glass using a spectrophotometer ("U-4100", manufactured by Hitachi High-Tech Corp.). The measurement conditions were a scan speed of 300 nm/min and a slit width of 8 nm, the chromaticity a* and b* with a D65 light source and 10° field of view were calculated from the resulting spectral transmittance in accordance with JIS Z 8781 (2009), c* was also obtained from a* and b*, and the resulting values were taken as Ta*1, Tb*1 and Tc*1, respectively.

Furthermore, in the laminated glass comprising the first resin layer and the second resin layer, a*, b* and c* obtained by measurement from the face of the laminated glass on the first resin layer side were taken as Ta*1, Tb*1 and Tc*1, respectively, while a*, b* and c* obtained by measurement from the face of the laminated glass on the second resin layer side were taken as Ta*2, Tb*2 and Tc*2, respectively.

### [Haze]

The haze was measured in accordance with JIS K6714 from one face of the laminated glass obtained, and taken as Haze 1. Furthermore, in the laminated glass comprising the first resin layer and the second resin layer, the haze measured from the face of the laminated glass on the first resin layer side was taken as Haze 1, and the haze measured from the face on the second resin layer side was taken as Haze 2.

### [a* and b* of Reflected Light in Filler (A)]

a* and b* of reflected light were measured for the fillers used in the examples and comparative examples, by preparing interlayer films and then laminated glass as follows.

40 parts by mass of triethylene glycol di-2-ethylhexanoate and 0.05 mass% (based on total amount of resin composition) of filler were admixed with 100 parts by mass of polyvinyl butyral resin to obtain a resin composition which was extruded to obtain an interlayer film having a thickness of 760 µm. Two reference glass sheets were bonded together with the resulting interlayer film therebetween, to obtain laminated glass (laminated glass for measurement). The production conditions for the interlayer film and the laminated glass for measurement were the same as in Example 1. Furthermore, the polyvinyl butyral resin and triethylene glycol di-2-ethylhexanoate were the same as those used in Example 1.

The spectral reflectance was measured from one face of the laminated glass for measurement, and a* and b* were calculated from the resulting spectral reflectance, and taken as a* and b* of reflected light in each filler. The method for measuring spectral reflectance and a* and b* employed the same conditions as when Ra*1 and Rb*1 were obtained.

### [Optical Characteristics (Rc*, Tc* and Haze) of First Resin Layer]

Laminated glass (laminated glass for measurement) was obtained by bonding together two reference glass sheets with the first resin layer, produced in the examples and comparative examples, therebetween. The production conditions for the interlayer film and the laminated glass for measurement were the same as in Example 1. Furthermore, the polyvinyl butyral resin and triethylene glycol di-2-ethylhexanoate were the same as those used in Example 1.

The spectral reflectance was measured from one face of the laminated glass for measurement, a* and b* were calculated from the resulting spectral reflectance, and chroma c* was further obtained from a* and b*, and taken as chroma Rc* of reflected light in the first resin layer. It should be noted that the method for measuring spectral reflectance and a* and b* employed the same conditions as when Ra*1 and Rb*1 were obtained.

Furthermore, the spectral transmittance was measured using a spectrophotometer, a* and b* were calculated from the resulting spectral transmittance, and chroma c* was further obtained from a* and b*, and taken as chroma Tc* of transmitted light in the first resin layer.

In addition, the haze was measured in accordance with JIS K6714 for the resulting laminated glass for measurement, and the resulting value was taken as the haze (Haze) of the first resin layer.

### <Design Properties Evaluation>

One face of the laminated glass (the face on the first resin layer side when the second resin layer is present) was visually observed, and the design properties were evaluated according to the following evaluation criteria.
A: A metallic appearance with a high-class feel and an intense impression of gray color was produced.
B: A metallic appearance with a high-class feel was produced, although the impression of gray color was slightly weak.
C: Although a metallic appearance was produced, the impression of gray color was weak and there was no high-class feel; or a metallic appearance was not produced.

### <Transparency Evaluation>

Transparency when viewing external scenery through the laminated glass from the other face of the laminated glass (the face on the second resin layer side when a second resin layer is present) was evaluated according to the following evaluation criteria.
A: The external scenery could be clearly observed, excellent transparency.
B: The external scenery could be observed with some clarity, good transparency.
C: The external scenery looked indistinct, the transparency could not be considered good.

Moreover, the components used in the examples and comparative examples are as follows.

### (1) Thermoplastic resin

PVB: Polyvinyl butyral resin, degree of acetalization: 69 mol%, hydroxyl group amount: 30 mol%, degree of acetylation: 1 mol%, average degree of polymerization of PVA used in synthesis: 1700

### (2) Plasticizer

3GO: Triethylene glycol di-2-ethylhexanoate

### (3) Filler (A)

Oxide 1: Flat plate shape with three-layer structure shown in fig. 2, middle layer being an SiO₂ layer with refractive index of 1.46, coating layers being TiO₂ layers with refractive index of 2.49, D50: 14 µm, thickness 0.5 µm, aspect ratio: 2.8, a* of reflected light=6.2, b* of reflected light=-7.9

Oxide 2: Flat plate shape with three-layer structure shown in fig. 2, middle layer being an SiO₂ layer with refractive index of 1.46, coating layers being TiO₂ layers with refractive index of 2.49, D50: 14 µm, thickness 0.5 µm, aspect ratio: 2.8, a* of reflected light=-8.7, b* of reflected light=1.0

Oxide 3: Flat plate shape with three-layer structure shown in fig. 2, middle layer being an SiO₂ layer with refractive index of 1.46, coating layers being TiO₂ layers with refractive index of 2.49, D50: 14 µm, thickness 0.5 µm, aspect ratio: 2.8, a* of reflected light=-6.7, b* of reflected light=8.2

Oxide 4: Flat plate shape with three-layer structure shown in fig. 2, middle layer being an SiO₂ layer with refractive index of 1.46, coating layers being TiO₂ layers with refractive index of 2.49, D50: 14 µm, thickness 0.5 µm, aspect ratio: 2.8, a* of reflected light=-6.6, b* of reflected light=5.7

(NB: The chromaticity a* and b* of reflected light was adjusted by the thickness of coating layers in Oxides 1-4.)

Mica: Plate-like mica, "Iriodin 6163", manufactured by MERCK

### (4) Colorant

CB: Pigment Black 7 (CAS No. 1333-86-4), carbon black pigment

PB15-1: Pigment Blue 15-1 (CAS No. 12239-87-1), copper phthalocyanine-based pigment, blue-colored pigment

PR147: Pigment Red 147 (CAS No. 68227-78-1), naphthol azo-based pigment

PR202: Pigment Red 202 (CAS No. 3089-17-6), quinacridone-based pigment

### [Example 1]

### (Preparation of Interlayer film)

A resin composition for forming the first resin layer was obtained by mixing and dispersing two types of fillers (A) in a plasticizer in accordance with the formulation in Table 1, then introducing the materials into an extruder together with polyvinyl butyral resin (PVB), and thoroughly kneading the materials to homogeneity in the extruder. The resulting resin composition was extruded under conditions of an extrusion temperature of 200°C to obtain an interlayer film comprising a single first resin layer having a thickness of 760 µm. The interlayer film comprised a single resin layer, and the two types of fillers (A) were oriented so that the planar direction thereof lay along the planar direction of the interlayer film.

### (Preparation of Laminated Glass)

Two clear glass sheets were prepared, each with length 100 mm × breadth 100 mm × thickness 2.5 nm. The reference clear glass disclosed in the specification was used as the clear glass. The interlayer film obtained above was sandwiched between the two clear glass sheets and pressed and pre-bonded by means of a vacuum back process. The pressed and pre-bonded laminate was held for 20 minutes inside an autoclave under conditions of a temperature of 140°C and a pressure of 1.2 MPa, after which the temperature was lowered to 23°C and the pressure restored to atmospheric pressure to thereby complete the main press-bonding, and laminated glass comprising two clear glass sheets bonded by means of the interlayer film was obtained. The optical characteristics of the resulting laminated glass were measured, and are shown in Table 1 as characteristics of the interlayer film and laminated glass. Furthermore, the resulting laminated glass underwent various evaluations, the results of which are shown in Table 1.

### [Example 2]

### (Preparation of Interlayer film)

A resin composition for forming the first resin layer was obtained by mixing and dispersing fillers (A) in a plasticizer in accordance with the formulation in Table 1, then introducing the materials into a co-extruder together with polyvinyl butyral resin (PVB), and thoroughly kneading the materials to homogeneity in the co-extruder. Furthermore, a resin composition for forming the second resin layer was obtained by mixing and dispersing a colorant in a plasticizer in accordance with the formulation in Table 1, then introducing the materials into the co-extruder together with polyvinyl butyral resin (PVB), and thoroughly kneading the materials to homogeneity in the co-extruder. The resin compositions were co-extruded in the co-extruder under conditions of an extrusion temperature of 200°C to obtain an interlayer film comprising a first resin layer having a thickness of 760 µm and a second resin layer having a thickness of 760 µm. Laminated glass was then prepared in the same way as in Example 1 using the resulting interlayer film.

### [Examples 3, 5 and 6, and Comparative Example 11]

The above examples were carried out in the same way as Example 2, except that the formulations of the resin compositions for forming the first resin layer and the second resin layer were changed as indicated in Tables 1 and 3.

### [Examples 4 and 7, and Comparative Examples 1-10]

The above examples were carried out in the same way as Example 1, except that the formulations of the resin compositions for forming the first resin layer were changed as indicated in Tables 1-3.

### [Examples 8-15]

Laminated glass was prepared in the same way as in Example 2, except that a colorant was mixed with the plasticizer in addition to the fillers (A), in accordance with the formulations in Tables 1 and 2, when the resin composition for forming the first resin layer was obtained.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| First resin layer | Resin | Type | - | PVB | PVB | PVB | PVB | PVB | PVB | PVB | PVB |
| | | Number of parts | phr | 100 | 100 | 100 | 100 | 100 | 100 | 100 | 100 |
| | Plasticizer | Type | - | 3GO | 3GO | 3GO | 3GO | 3GO | 3GO | 3GO | 3GO |
| | | Number of parts | phr | 40 | 40 | 40 | 40 | 40 | 40 | 40 | 40 |
| | Filler | Type | - | Oxide 1 | Oxide 1 | Oxide 1 | Oxide 1 | Oxide 1 | Oxide 1 | Oxide 1 | Oxide 1 |
| | | Concentration | wt% | 0.05 | 0.05 | 0.05 | 0.05 | 0.05 | 0.05 | 0.05 | 0.05 |
| | | Type | - | Oxide 3 | Oxide 3 | Oxide 3 | Oxide 4 | Oxide 4 | Oxide 4 | Oxide 2 | Oxide 3 |
| | | Concentration | wt% | 0.05 | 0.05 | 0.05 | 0.05 | 0.05 | 0.05 | 0.05 | 0.05 |
| | Colorant | Type | - | - | - | - | - | - | - | - | PB15-1 |
| | | Concentration | wt% | - | - | - | - | - | - | - | 0.009 |
| Second resin layer | Resin | Type | - | - | PVB | PVB | - | PVB | PVB | - | PVB |
| | | Number of parts | phr | - | 100 | 100 | - | 100 | 100 | - | 100 |
| | Plasticizer | Type | - | - | 3GO | 3GO | - | 3GO | 3GO | - | 3GO |
| | | Number of parts | phr | - | 40 | 40 | - | 40 | 40 | - | 40 |
| | Colorant | Type | - | - | CB | CB | - | CB | CB | - | CB |
| | | Concentration | wt% | - | 0.025 | 0.075 | - | 0.025 | 0.075 | - | 0.025 |
| Optical characteristics of first resin layer | Rc* | | | 0.2 | 0.2 | 0.2 | 1.4 | 1.4 | 1.4 | 5.4 | 10.1 |
| | Tc* | | | 3.8 | 3.8 | 3.8 | 3.3 | 3.3 | 3.3 | 5 | 9.7 |
| | Haze | | % | 9.1 | 9.1 | 9.1 | 4.8 | 4.8 | 4.8 | 7.6 | 9.54 |
| Optical characteristics of filler | \|Ra*(F1)+Ra*(F2)\| | | - | 0.5 | 0.5 | 0.5 | 0.5 | 0.5 | 0.5 | 2.6 | 0.5 |
| | \|Rb*(F1)+Rb*(F2)\| | | - | 0.3 | 0.3 | 0.3 | 2.2 | 2.2 | 2.2 | 6.8 | 0.3 |
| Spectral reflectance at400-700 nm | Wavelength Amax of maximum reflectance | | nm | 420 | 420 | 425 | 420 | 415 | 560 | 470 | 420 |
| | Reflectance Rmax | | % | 15.6 | 13.1 | 12.8 | 20.4 | 17.5 | 15.4 | 19.4 | 12.1 |
| | Wavelengh in of minimum reflectance | | nm | 490 | 485 | 490 | 475 | 475 | 475 | 590 | 610 |
| | Reflectance Rmin | | % | 13.0 | 10.1 | 9.9 | 16.7 | 13.6 | 13.7 | 14.1 | 8.1 |
| | Reflectance ratio (Rmax/Rmin) | | - | 1.20 | 1.30 | 1.30 | 1.22 | 1.29 | 1.12 | 1.37 | 1.48 |
| Optical characterises measured from one face (face on the first resin layer side) | Rv1 | | % | 14.3 | 11.6 | 11.3 | 17.4 | 14.2 | 14.5 | 15.6 | 9.3 |
| | Ra*1 | | - | 0.0 | 0.2 | 0.3 | -1.3 | -1.4 | -1.2 | -2.4 | -2.0 |
| | Rb*1 | | | -0.2 | -0.2 | -0.2 | -0.4 | -0.6 | -0.7 | -4.8 | -3.6 |
| | Rc*1 | | | 0.2 | 0.3 | 0.4 | 1.4 | 1.6 | 1.4 | 5.4 | 4.1 |
| | Tv1 | | % | 72.5 | 14.2 | 3.9 | 74.3 | 14.7 | 3.9 | 72.9 | 11.0 |
| | Ta*1 | | - | -1.7 | -4.9 | -4.7 | -1.7 | -5.0 | -4.7 | -0.3 | -10.2 |
| | Tb*1 | | - | 3.3 | 3.0 | 3.8 | 2.8 | 2.6 | 3.7 | 5.0 | -1.7 |
| | Tc*1 | | - | 3.8 | 5.8 | 6.1 | 3.3 | 5.6 | 6.0 | 5.0 | 10.3 |
| | Haze1 | | % | 9.1 | 10.2 | 10.3 | 4.8 | 5.3 | 6.0 | 7.6 | 9.9 |
| Optical characteristics measured from other face (face on the second resin layer side) | Rv2 | | % | - | 5.1 | 4.7 | - | 52 | 4.7 | - | 4.8 |
| | Ra*2 | | - | - | -0.5 | -0.1 | - | -4.7 | -0.1 | - | -0.6 |
| | Rb*2 | | - | - | -0.7 | -1.0 | - | 3.7 | -1.0 | - | -0.9 |
| | Rc*2 | | - | - | 0.9 | 1.0 | - | 6.0 | 1.0 | - | 1.1 |
| | Tv2 | | % | - | 14.2 | 3.9 | - | 14.7 | 3.9 | - | 11.1 |
| | Ta*2 | | - | - | -5.0 | -4.7 | - | -5.0 | -0.7 | - | -9.8 |
| | Tb*2 | | - | - | 3.0 | 3.8 | - | 2.6 | -0.7 | - | -1.3 |
| | Tc*2 | | - | - | 5.8 | 6.1 | - | 5.6 | 1.0 | - | 9.9 |
| | Haze2 | | % | - | 10.2 | 10.3 | - | 5.3 | 6.0 | - | 9.7 |
| Evaluation | Design properties evaluation | | - | A | A | A | A | A | A | B | B |
| | Transparency evaluation | | - | A | B | B | A | A | A | A | B |

**[Table 2]**

| | | | | Example 9 | Example 10 | Example 11 | Example 12 | Example 13 | Example 14 | Example 15 | Comparative Example 1 | Comparative Example 2 |
|---|---|---|---|---|---|---|---|---|---|---|---|---|
| First resin layer | Resin | Type | - | PVB | PVB | PVB | PVB | PVB | PVB | PVB | PVB | PVB |
| | | Number of parts | phr | 100 | 100 | 100 | 100 | 100 | 100 | 100 | 100 | 100 |
| | Plasticizer | Type | - | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 |
| | Filler | Type | - | Oxide 1 | Oxide 1 | Oxide 1 | Oxide 1 | Oxide 1 | Oxide 1 | Oxide 1 | Oxide 3 | Oxide 1 |
| | | Concentration | wt% | 0.05 | 0.05 | 0.05 | 0.05 | 0.05 | 0.05 | 0.05 | 0.05 | 0.05 |
| | | Type | - | Oxide 3 | Oxide 3 | Oxide 3 | Oxide 3 | Oxide 3 | Oxide 3 | Oxide 3 | Oxide 4 | - |
| | | Concentration | wt% | 0.05 | 0.05 | 0.05 | 0.05 | 0.05 | 0.05 | 0.05 | 0.05 | - |
| | Colorant | Type | - | PB15-1 | PR147 | PR147 | PR147 | PR202 | PR202 | PR202 | - | - |
| | | Concentration | wt% | 0.032 | 0.0003 | 0.016 | 0.023 | 0.01 | 0.02 | 0.04 | - | - |
| Second resin layer | Resin | Type | - | PVB | PVB | PVB | PVB | PVB | PVB | PVB | - | - |
| | | Number of parts | phr | 100 | 100 | 100 | 100 | 100 | 100 | 100 | - | - |
| | Plasticizer | Type | - | 3GO | 3GO | 3GO | 3GO | 3GO | 3GO | 3GO | - | - |
| | | Number of parts | phr | 40 | 40 | 40 | 40 | 40 | 40 | 40 | - | - |
| | Colorant | Type | - | CB | CB | CB | CB | CB | CB | CB | - | - |
| | | Concentration | wt% | 0.025 | 0.025 | 0.025 | 0.025 | 0.025 | 0.025 | 0.025 | - | - |
| Optical characteristics of first resin layer | Rc* | | | 8.8 | 0.2 | 3.8 | 5.39 | 0.7 | 0.9 | 1.4 | 13.8 | 10.0 |
| | Tc* | | | 20.5 | 3.5 | 8.8 | 11.1 | 3.8 | 4.4 | 4.9 | 2.2 | 5.7 |
| | Haze | | % | 10.8 | 8.9 | 9.0 | 9.21 | 8.82 | 8.93 | 9.01 | 11.2 | 1.2 |
| Optical characteristics of filler | \|Ra*(F1)+Ra*(F2)\| | | - | 0.5 | 0.5 | 0.5 | 0.5 | 0.5 | 0.5 | 0.5 | 13.3 | - |
| | \|Rb*(F1)+Rb*(F2)\| | | - | 0.3 | 0.3 | 0.3 | 0.3 | 0.3 | 0.3 | 0.3 | 13.9 | - |
| Spectral reflectance at 400-700 nm | Wavelength λmax of maximum reflectance | | nm | 420 | 420 | 420 | 420 | 420 | 420 | 420 | 540 | 430 |
| | Reflectance Rmax | | % | 12.5 | 12.6 | 12.2 | 12.8 | 124 | 13.2 | 12.4 | 20.9 | 14.9 |
| | Wavelength λmin of minimum reflectance | | nm | 610 | 485 | 485 | 485 | 485 | 485 | 485 | 450 | 520 |
| | Reflectance Rmin | | % | 7.9 | 9.8 | 8.9 | 9.9 | 9.4 | 9.9 | 9.3 | 12.6 | 9.4 |
| | Reflectance ratio (Rmax/Rmin) | | - | 1.58 | 1.29 | 1.38 | 1.29 | 1.32 | 1.33 | 1.33 | 1.65 | 1.58 |
| Optical characteristics measured from one face (face on the first resin layer side) | Rv1 | | % | 9.0 | 11.2 | 10.6 | 9.3 | 11.0 | 11.4 | 10.6 | 18.3 | 10.5 |
| | Ra*1 | | - | -1.3 | 0.2 | 2.3 | 9.5 | 0.6 | 1.0 | 1.2 | -9.2 | 6.2 |
| | Rb*1 | | - | -5.2 | -0.2 | -0.2 | 3.4 | -02 | -0.8 | -1.0 | 10.3 | -7.9 |
| | Rc*1 | | - | 5.4 | 0.2 | 2.3 | 10.1 | 0.6 | 1.3 | 1.6 | 13.8 | 10.0 |
| | Tv1 | | % | 9.5 | 13.8 | 12.5 | 6.9 | 14.1 | 12.5 | 13.4 | 66.5 | 85.1 |
| | Ta*1 | | - | -12.9 | -4.7 | 0.3 | 27.6 | -3.7 | -4.6 | -2.5 | 1.9 | -3.6 |
| | Tb*1 | | - | -5.1 | 2.8 | 3.3 | 11.2 | 4.8 | 2.1 | 3.6 | -1.0 | 4.4 |
| | Tc*1 | | - | 13.9 | 5.5 | 3.3 | 29.8 | 6.0 | 5.1 | 4.4 | 2.2 | 5.7 |
| | Haze1 | | % | 11.5 | 9.8 | 10.5 | 11.7 | 9.1 | 9.3 | 9.9 | 11.2 | 1.2 |
| Optical characteristics measured from other face (face on the second resin layer side) | Rv2 | | % | 4.8 | 5.0 | 4.9 | 4.8 | 4.9 | 4.9 | 4.9 | - | - |
| | Ra*2 | | - | -0.6 | -0.4 | -0.1 | 0.7 | -0.4 | -0.4 | -0.4 | - | - |
| | Rb*2 | | - | -1.3 | -0.8 | -0.9 | -0.5 | -0.7 | -0.7 | -0.7 | - | - |
| | Rc*2 | | - | 1.5 | 0.9 | 0.9 | 0.9 | 0.8 | 0.8 | 0.8 | - | - |
| | Tv2 | | % | 9.4 | 13.7 | 12.5 | 7.0 | 13.3 | 13.3 | 12.8 | - | - |
| | Ta*2 | | - | -12.9 | -4.7 | 0.4 | 27.6 | -4.9 | -4.6 | -4.3 | - | - |
| | Tb*2 | | - | -5.1 | 2.9 | 3.3 | 11.2 | 2.6 | 2.2 | 1.8 | - | - |
| | Tc*2 | | - | 13.8 | 5.5 | 3.3 | 29.8 | 5.5 | 5.1 | 4.7 | - | - |
| | Haze2 | | % | 11.5 | 9.8 | 9.3 | 11.6 | 9.1 | 9.3 | 9.9 | - | - |
| Evaluation | Design properties evaluation | | - | B | A | A | B | A | A | A | C | C |
| | Transparency evaluation | | - | B | B | A | B | A | A | B | B | A |

**[Table 3]**

| | | | | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| First resin layer | Resin | Type | - | PVB | PVB | PVB | PVB | PVB | PVB | PVB | PVB | PVB |
| | | Number of parts | phr | 100 | 100 | 100 | 100 | 100 | 100 | 100 | 100 | 100 |
| | Plasticizer | Type | - | 3GO | 3GO | 3GO | 3GO | 3GO | 3GO | 3GO | 3GO | 3GO |
| | | Number of parts | phr | 40 | 40 | 40 | 40 | 40 | 40 | 40 | 40 | 40 |
| | Filler | Type | - | Oxide 1 | Oxide 2 | Oxide 2 | Oxide 3 | Oxide 3 | Oxide 4 | Oxide 4 | Mica | Mica |
| | | Concentration | wt% | 0.1 | 0.05 | 0.1 | 0.05 | 0.1 | 0.05 | 0.1 | 0.1 | 0.1 |
| | | Type | - | - | - | - | - | - | - | - | - | - |
| | | Concentration | wt% | - | - | - | - | - | - | - | - | - |
| | Colorant | Type | - | - | - | - | - | - | - | - | - | - |
| | | Concentration | wt% | - | - | - | - | - | - | - | - | - |
| Second resin layer | Resin | Type | - | - | - | - | - | - | - | - | - | PVB |
| | | Number of parts | phr | - | - | - | - | - | - | - | - | 100 |
| | Plasticizer | Type | - | - | - | - | - | - | - | - | - | 3GO |
| | | Number of parts | phr | - | - | - | - | - | - | - | - | 40 |
| | Colorant | Type | - | - | - | - | - | - | - | - | - | CB |
| | | Concentration | wt% | - | - | - | - | - | - | - | - | 0.025 |
| Optical | Rc* | | | 16.6 | 8.8 | 12.3 | 10.6 | 16.7 | 8.7 | 12.2 | 3.9 | 3.9 |
| characteristics of | Tc* | | | 9.4 | 2.6 | 5.4 | 0.4 | 3.8 | 0.5 | 2.7 | 4.9 | 4.9 |
| first resin layer | Haze | | % | 2.1 | 6.8 | 13.0 | 8.5 | 15.8 | 3.9 | 7.7 | 14.4 | 14.4 |
| Optical characteristics of filler | \|Ra*(F1)+Ra*(F2)\| | | - | - | - | - | - | - | - | - | - | - |
| | \|Rb_{*}(F1)-Rb_{*}(F2)\| | | - | - | - | - | - | - | - | - | - | - |
| Spectral reflectance at 400-700 nm | Wavelength λmax of maximum reflectance | | nm | 430 | 500 | 500 | 540 | 540 | 540 | 540 | 450 | 450 |
| | Reflectance Rmax | | % | 21.9 | 17.5 | 24.8 | 14.0 | 18.1 | 17.3 | 24.1 | 22.3 | 20.4 |
| | Wavelength λmin of minimum reflectance | | nm | 520 | 595 | 595 | 440 | 440 | 450 | 450 | 700 | 700 |
| | Reflectance Rmin | | % | 10.7 | 11.4 | 14.3 | 9.2 | 9.8 | 12.5 | 15.9 | 16.2 | 14.2 |
| | Reflectance ratio (Rmax/Rmin) | | - | 2.04 | 1.54 | 1.74 | 1.52 | 1.84 | 1.38 | 1.52 | 1.38 | 1.44 |
| Optical characteristics measured from one face (face on the first resin layer side) | Rv1 | | % | 12.8 | 13.6 | 17.9 | 12.5 | 15.9 | 15.7 | 21.6 | 19.8 | 17.7 |
| | Ra*1 | | - | 10.9 | -8.7 | -12.1 | -6.7 | -9.8 | -6.6 | -8.9 | -2.3 | -2.4 |
| | Rb*1 | | - | -12.5 | 1.0 | 1.8 | 8.2 | 13.5 | 5.7 | 8.3 | -3.2 | -3.9 |
| | Rc*1 | | - | 16.6 | 8.8 | 12.3 | 10.6 | 16.7 | 8.7 | 12.2 | 3.9 | 4.6 |
| | Tv1 | | % | 81.8 | 75.5 | 64.8 | 75.0 | 53.9 | 77.1 | 67.1 | 61.5 | 11.5 |
| | Ta*1 | | - | -5.6 | 1.8 | 4.8 | 0.4 | 3.6 | 0.4 | 2.1 | -0.4 | -4.4 |
| | Tb*1 | | - | 7.5 | 1.9 | 2.4 | 0.2 | -1.3 | -0.3 | -1.7 | 4.9 | 4.1 |
| | Tc*1 | | - | 9.4 | 2.6 | 5.4 | 0.4 | 3.8 | 0.5 | 2.7 | 4.9 | 6.0 |
| | Haze1 | | % | 2.1 | 6.8 | 13.0 | 8.5 | 15.8 | 3.9 | 7.7 | 14.4 | 15.0 |
| Optical characteristics measured from other face (face on the second resin layer side) | Rv2 | | % | - | - | - | - | - | - | - | - | 5.2 |
| | Ra*2 | | - | - | - | - | - | - | - | - | - | -0.9 |
| | Rb*2 | | - | - | - | - | - | - | - | - | - | -0.9 |
| | Rc*2 | | - | - | - | - | - | - | - | - | - | 1.3 |
| | Tv2 | | % | - | - | - | - | - | - | - | - | 11.5 |
| | Ta*2 | | - | - | - | - | - | - | - | - | - | -4.4 |
| | Tb*2 | | - | - | - | - | - | - | - | - | - | 4.1 |
| | Tc*2 | | - | - | - | - | - | - | - | - | - | 6.0 |
| | Haze2 | | % | - | - | - | - | - | - | - | - | 15.0 |
| Evaluation | Design properties evaluation | | - | C | C | C | C | C | C | C | C | C |
| | Transparency evaluation | | - | A | A | C | A | C | A | A | C | C |

| | | | | | | | | | | | | |
|---|---|---|---|---|---|---|---|---|---|---|---|---|
| Note: phr means parts by mass with respect to 100 parts by mass of PVB. Note: wt% means content (mass%) in the first resin layer or the second resin layer. | | | | | | | | | | | | |

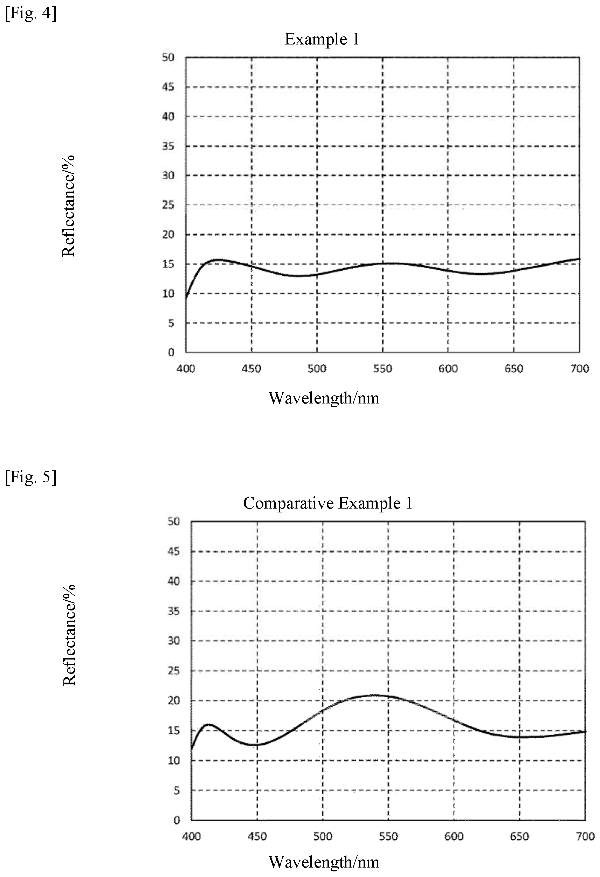

As shown in Tables 1-3, the interlayer films of Examples 1-15 comprised a first resin layer containing two types of fillers (A), and had flat reflectance, as shown in fig. 4, for example, in the spectral reflectance curve at wavelengths of 400-700 nm, and also had haze of 2.0% or greater and 13.0% or less, and were thereby capable of producing a metallic appearance with a high-class feel while also having good transparency.
In contrast to this, the first resin layer of Comparative Example 1 comprised two types of fillers (A), but the two types of fillers (A) had similar colors without a complementary color relationship, and could not be said to have a flat reflectance in the spectral reflectance curve at wavelengths of 400-700 nm, as is shown in fig. 5, and although a metallic appearance was produced, the color was relatively intense and could not be said to have a high-class feel. Furthermore, although a certain metallic appearance was produced in Comparative Examples 2-11, a metallic appearance with a high-class feel could not be produced because there was only one type of filler (A). In addition, in Comparative Examples 5, 7, 10 and 11, the interlayer film had high haze, and although it was clear, the external scenery was indistinct and the transparency could not be considered good.

Among the examples, Examples 1, 4 and 7 were not provided with the second resin layer and therefore had high visible light transmittance and excellent clarity. Furthermore, in Example 7, the first resin layer had high chroma Rc* and Tc*, and the interlayer film also had high chroma Rc* and Tc*, so the metallic appearance had a certain amount of color. In Examples 1 and 4, on the other hand, the first resin layer had low chroma Rc* and Tc*, and the interlayer film also had low chroma Rc* and Tc*, so the metallic appearance had a higher-class feel with an intense impression of gray color.

Examples 2, 3, 5, 6 and 8-15 comprised the second resin layer and therefore had low visible light transmittance, but sufficient transparency could be maintained. Among these, Examples 2, 3, 5 and 6 produced a metallic appearance with a high-class feel and a strong impression of gray color in the same way as Examples 1 and 4. Meanwhile, the first resin layer of Examples 8-15 contained a colorant, and a metallic appearance with an impression of depth was therefore apparent, with the impression of gray color maintained and coloring commensurate with the colorant of each example.
In addition, in Examples 2, 3, 9 and 12, there was virtually no metallic appearance when the laminated glass was viewed from the second resin layer side (e.g., from inside the vehicle) because the second resin layer was provided, but the external scenery was clear to some extent, and the transparency was good. Furthermore, in Examples 5, 6, 8, 10, 11 and 13-15, there was virtually no metallic appearance even when the laminated glass was viewed from the second resin layer side (e.g., from inside the vehicle) but the external scenery was clear and the transparency was excellent.

### Key to Symbols

10... Middle layer
11, 12... Coating layer
20... Interlayer film for laminated glass
21... First resin layer
22... Second resin layer
30... Laminated glass
31... First laminated glass member
32... Second laminated glass member

## Claims

1. An interlayer film for laminated glass
comprising a first resin layer, wherein
the first resin layer includes at least two or more types of fillers (A),
the haze is 2.0% or greater and 13.0% or less, and
the reflectance is flat in a spectral reflectance curve at wavelengths of 400-700 nm.

2. The interlayer film for laminated glass as claimed in claim 1, wherein a ratio of the maximum value to the minimum value of the reflectance in the spectral reflectance curve at wavelengths of 400-700 nm is 1.0 or greater and 1.4 or less.

3. The interlayer film for laminated glass as claimed in claim 1, wherein the fillers (A) have a* of reflected light of -9.0 or greater and 7.0 or less, and b* included in a range of -8.5 or greater and 8.5 or less.

4. The interlayer film for laminated glass as claimed in claim 1, wherein the fillers (A) comprise two or more types of complementary colors.

5. The interlayer film for laminated glass as claimed in claim 1, wherein, for any two types of fillers in the fillers (A), the absolute value of a value obtained by adding a* of reflected light (|Ra* (F1) + Ra* (F2)|) is 0 or greater and 3.0 or less, and the absolute value of a value obtained by adding b* of reflected light (|Rb* (F1) + Rb* (F2)|) is 0 or greater and 7.0 or less.
(Where a* and b* of a first type of filler are Ra* (F1) and Rb* (F1), and a* and b* of a second type of filler are Ra* (F2) and Rb* (F2).)

6. The interlayer film for laminated glass as claimed in claim 1, wherein the at least two or more types of fillers (A) each comprise a metal oxide.

7. The interlayer film for laminated glass as claimed in claim 1, wherein chroma Rc* of reflected light in the visible light region of the first resin layer is 0 or greater and 5.5 or less.

8. The interlayer film for laminated glass as claimed in claim 1, wherein chroma Tc* of transmitted light in the visible light region of the first resin layer is 0 or greater and 5.5 or less.

9. The interlayer film for laminated glass as claimed in claim 1, wherein the first resin layer satisfies at least any of the following conditions (1)-(3).
(1) The chroma Rc* of reflected light in the visible light region is 0 or greater and 4.0 or less.
(2) The chroma Tc* of transmitted light in the visible light region is 0 or greater and 4.0 or less.
(3) The haze is 3.0% or greater and 10.0% or less.

10. The interlayer film for laminated glass as claimed in claim 1, wherein the first resin layer further comprises a colorant.

11. The interlayer film for laminated glass as claimed in claim 1, further comprising a second resin layer.

12. The interlayer film for laminated glass as claimed in claim 11, wherein the second resin layer comprises a colorant.

13. The interlayer film for laminated glass as claimed in claim 12, wherein a ratio of the maximum value to the minimum value of the reflectance is 1.0 or greater and 1.6 or less in a spectral reflectance curve at wavelengths of 400-700 nm, as measured from the first resin layer side.

14. The interlayer film for laminated glass as claimed in claim 1, which satisfies at least either of the following conditions (4) and (5).
(4) The chroma Rc* of reflected light in the interlayer film for laminated glass is 0 or greater and 7.0 or less.
(5) The chroma Tc* of transmitted light in the interlayer film for laminated glass is 0 or greater and 7.0 or less.

15. A laminated glass comprising:
a first laminated glass member;
a second laminated glass member; and
the interlayer film for laminated glass as claimed in any one of claims 1 to 14,
wherein the interlayer film is disposed between the first laminated glass member and the second laminated glass member.
